# EUROPÄISCHE PATENTANMELDUNG

(11) **EP 1 353 276 A2**
(43) Veröffentlichungstag der Anmeldung: **15.10.2003**
(21) Anmeldenummer: 03004364.0
(22) Anmeldetag: 03.03.2003
(51) Int. Cl.: G06F 17/24, G06F 3/12

(54) **Drucken mit variablen Daten unter Verwendung einer dynamischen Ausschiessvorlage**

(30) Priorität: 09.04.2002 US 118772
(71) Anmelder: NexPress Solutions LLC, Rochester, NY 14653-7103 (US)
(72) Erfinder: Donahue, Timothy F., Mendon, NY 14506 (US); Kloosterman, David, Penfield, NY 14526 (US)
(74) Vertreter: Franzen, Peter

(57) **Zusammenfassung**

Verfahren und Vorrichtung zum Erzeugen von Vorlagen, die beim Drucken mit variablen Daten verwendbar sind, durch Analysieren einer Auftragsdatei für variables Drucken für produktionsbezogene Parameter, um eine Gruppe von Familien zu erzeugen und jede der Familien einer Menge von Herstellungsmöglichkeiten für die Druckvorrichtung (3) zuzuordnen, die für den Druckauftrag mit variablen Daten vorgesehen ist, um einen Satz von Vorlagen zu erstellen.

## Beschreibung

Die vorliegende Erfindung betrifft digitales Drucken und insbesondere digitale Drucksysteme, die variable Daten im Verbindung mit statischen Daten verwenden.

Das Drucken mit variablen Daten, das so genannte Variable Data Printing (VDP), ist eine Form des Druckens, die individuelle Drucksachen erzeugt, von denen jede Druckseite Informationen enthält, die auf einen individuellen Empfänger abgestimmt sind. Die VDP-Erstellung verbindet die grafische Aufbereitung der Seite mit dem Bereich der Informationstechnologie, um ein Mittel bereitzustellen, das Druckaufträge mit variablen Daten erzeugt, die in einen oder in mehrere Druckproduktionsprozesse einfließen, in denen die gedruckten und weiterverarbeiteten Drucksachen erzeugt werden. Diese einen VDP-Auftrag umfassenden Falldokumente (Instance Documents) mit variablem Inhalt werden auf Basis von Daten erstellt, die aus einer Datenbank mit Informationssätzen stammen, die die individuellen Empfänger charakterisieren. Für das grafische Gewerbe und für das Druckgewerbe sieht man das Potenzial von VDP in einer ausgeprägten 1:1-Marketingkommunikation, ähnlich wie dies bereits aus der 1:1-Marketingpraxis mit Kommunikationsmedien, wie dem Internet, bekannt ist.

Ein allgemeines Problem von VDP besteht darin, dass ein RIP (Raster Image Processor) zum Rastern und Drucken von Druckaufträgen mit variablen Daten normalerweise längere Zeit benötigt als bei konventionellen statischen Druckaufträgen mit nicht variablen Daten. Variable Druckdaten werden an einen RIP gesendet, wo der Code für die Text- und Grafikelemente in ein Rasterdatenformat umgesetzt wird, das von der Markierungsvorrichtung (marking engine) eines Digitaldruckers verwendbar ist. Daher muss auf jeder Seite mit variablen Daten jedes Codeelement mit dem RIP gerastert werden. Durch die Notwendigkeit, die Elemente mit variablen Daten einzeln rastern zu müssen, entsteht ein erheblicher Verarbeitungsengpass im Vergleich mit der Rasterung statischer Druckaufträge, die ein einzelnes Dokument umfassen, das nur einmal gerastert zu werden braucht, worauf eine Vielzahl von Kopien mithilfe derselben RIP-Ausgabe bebildert werden kann.

Über das konventionelle Drucken mit variablen Daten von wechselnden Seiteninhalten für entsprechende Falldokumente hinaus ist es ebenfalls möglich, weitere Eigenschaften der Drucksachen zu verändern, wie die Weiterverarbeitungseigenschaften, u. a. der Art der Bindung und der Wahl des Trägers, die sich nach Regeln aus der besagten Empfängerdatenbank richten, die bei der bedingten Zuordnung des Seiteninhalts Verwendung finden. Auf diese Weise können Empfänger, die für die Marketingfirma, für die der VDP-Auftrag produziert wird, von höherem Wert sind, eine Drucksache auf Druckmedien höherer Qualität mit einer höherwertigen Bindung erhalten, während geringer eingeschätzte Kunden mit geringerem Wertpotenzial nur ein Dokument mit Eckheftung erhalten, das sich billiger produzieren lässt, jedoch bei dem vorgesehenen Empfänger eine ausreichende Marketingwirkung entfaltet. Das impliziert die Notwendigkeit, zusammen mit dem Seiteninhalt und den Layoutdaten weitere Daten zu speichern, die die physischen Eigenschaften jeder herzustellenden Drucksache ausdrücken und als Produktzweckdaten (product intent data) bezeichnet werden. Die Ergänzung um diese Produktzweckdaten, die die physischen Eigenschaften der weiterverarbeiteten Dokumente des VDP-Auftrags auf Basis des Datenprofils der verschiedenen Empfänger variieren können, kann den Workflow des Herstellungsprozesses in der Umgebung des Druckleistungsanbieters derart komplex werden lassen, dass dort der erforderliche Workflow möglicherweise nicht erzielbar ist. Es besteht daher ein erhebliches Problem in den Fällen, in denen ein VDP-Auftrag ohne Kenntnis über die Workflow-Möglichkeiten des Druckleistungsanbieters gestaltet wird und der zu komplex ist, als dass er produziert werden könnte.

Es besteht daher im grafischen Gewerbe der Bedarf zur Beseitigung der zuvor beschriebenen Nachteile nach dem Stand der Technik und zur Ermöglichung einer schnelleren Form von VDP bis zur Herstellung und Weiterverarbeitung der Drucksache. Es ist zudem wünschenswert, in der Druckmaschine derzeit gängige Methoden zu verwenden. Das grafische Gewerbe bedarf eines Verfahrens und einer Vorrichtung, das bzw. die einen effizienten und zuverlässigen Austausch von variablen Daten zur Verwendung in Druckaufträgen mit variablen Daten erzeugt.

Eine als Personalized Print Markup Language (PPML) bezeichnete Druckseitenbeschreibungssprache, die von der Print On Demand Initiative (PODi) entwickelt worden ist, ist ein Beispiel eines Datenformats, das das Layout der Seiten der vielen individuellen Falldokumente eines Druckauftrags mit variablen Daten darstellen kann. PPML basiert auf XML (Extensible Markup Language) und ist derart strukturiert, dass Inhaltsdaten, die unter demselben Rendering-Kontext auf einer oder auf mehreren Seiten mehrfach verwendet werden, explizit bezeichnet sind, um die Verarbeitungsleistung eines laufenden RIP-Prozesses zu optimieren. Idealerweise verarbeitet ein PPML RIP alle Inhaltselemente, einschließlich der bezeichneten wieder verwendeten und nicht wieder verwendeten Inhaltselemente ein einziges Mal, wobei die wieder verwendeten Elemente in einem Zwischenspeicher (Cache) abgelegt werden, nachdem sie das erste Mal gerastert worden sind, um dann als gerasterte Daten wieder verwendet zu werden.

Die Tatsache, dass ein Drucker-RIP gerasterte grafische Elemente nach Bedarf speichern und wieder verwenden kann, stellt eine beträchtliche Verbesserung in der Verarbeitungsleistung dar. Die Fähigkeit, diese Elemente wieder zu verwenden, erübrigt zudem die Notwendigkeit, den Quellcode, der das Inhaltselement definiert, mehrmals während desselben Druckauftrags zu dem Drucker/RIP zu senden. PPML ist für das Drucken variabler Daten ein deutlicher Fortschritt, weil es einem Drucker/RIP ermöglicht, Daten auf Objektebene anstatt auf Seitenebene zu verstehen. Einem Drucker/RIP wird somit ein gewisses Maß an Intelligenz sowie eine Manipulation der Komponenten (Objekte) ermöglicht, die eine Seite ausmachen. Codeentwickler sind zudem in der Lage, Objekte zu benennen, was die Wiederverwendung der Objekte nach Bedarf während des Druckens eines Auftrags mit variablen Daten ermöglicht.

Der Austausch variabler Daten (VDX / Variable Data Exchange) ist ein Standard, der kürzlich im CGATS (Committee for Graphics Arts Technologies Standards) als Produktionswerkzeug für variable Daten in Form eines VDX-Falls in Verbindung mit PPML definiert worden ist. Ein VDX-Fall (Instance) kann als Kompilation von Datensätzen betrachtet werden, die den Inhalt und das Layout zahlreicher Verbundseiten definieren. Diese VDX-Fälle sind in der PPML zur Erstellung der Verbunddefinitionen von PPML/VDX-Falldokumenten (Instance Document) verwendbar. Jede Verbundseite eines PPML/VDX-Falldokuments ist eine Sammlung einer oder mehrerer Teilseiten oder Inhaltsobjekte, die als Verbundelemente bezeichnet werden. PPML/VDX ermöglicht es, Verbundelemente einmal zu definieren und sich mehrmals aus den verschiedenen Verbundseiten-Layoutfällen darauf zu beziehen, um die Gesamtgröße der Daten für einen PPML/VDX-Fall wirksam zu reduzieren.

Die Layoutdaten, die die Verbundseiten eines PPML/VDX-Falles beschreiben, werden anhand einer Untermenge der zuvor beschriebenen PPML definiert. Das von dem PPML/VDX-Standard zur Definition der Verbundelement-Datenquelle benötigte Datenformat ist das Adobe Portable Document Format (PDF), das von Adobe Systems® definiert und fortgeschrieben wird. In PPML/VDX werden die PDL-Quellendaten, die ein Verbundelement definieren, das auf einem PPML-definierten Seitenlayout angeordnet ist, stets als eine Seite einer PDF-Datei ausgedrückt. PDF-Dateien, die zur Definition von PPML/VDX-Elementen dienen, müssen alle notwendigen Ressourcen enthalten, wie Schriften, Bilddaten und Farbprofile. PDF-Dateien, die zur Definition von PPML/VDX-Verbundelementen dienen, müssen zudem den gesamten Farbinhalt in einer bekannten Referenzvorrichtung oder einem geräteunabhängigen Farbraum enthalten.

VDX setzt voraus, dass die PPML-Layoutdaten eines VDX-Falls als einzelner, frei zugänglicher PDF-Objektstrom abgelegt sind, der wiederum in einer PDF-Datei gespeichert ist. Ja nach Maß der Übereinstimmung kann die PDF-Datei, in der die PPML-Daten eingebettet sind, auch einige oder möglicherweise alle PDF-Seitenobjektdefinitionen enthalten, die von dem VDX-Fall benötigt werden, der ein PPML-Layoutdatenobjekt begründet. Die PPML/VDX-Datei, die ein XML-Dokument umfasst, das wiederum die PPML- und Produktzweckdaten enthält, wird als PPML/VDX-Layoutdatei bezeichnet. PDF-Dateien, die nur PDF-Seitenobjekte enthalten, die nur zur Erzeugung von Verbundelementdefinitionen dienen und in denen keine XML-Elemente gespeichert sind und auf die aus dem PPML-Datenspeicher in einer PPML/VDX-Layoutdatei zugegriffen werden kann, werden als PPML/VDX-Inhaltsdatei bezeichnet.

Eine VDP-Auftragsdefinition, die von einer bestimmten Vorrichtung und einem Produktions-Workflow vollständig unabhängig ist, besteht aus drei Grundkomponenten, von denen zwei die Darstellung des variablen Seiteninhalts definieren, nämlich die Layoutdaten (auch als Markup bezeichnet) und die Inhaltsdaten. In einem PPML/VDX-Fall ist die Layoutkomponente durch die PPML-Daten definiert und die Inhaltskomponente ist durch die PDF-Daten definiert. Die dritte Komponente, als Produktzweckdaten bezeichnet, liefert die Beschreibung des fertigen Produkts. Die Produktzweckdaten umfassen typischerweise Informationen, wie die Art der Dokumentbindung, einseitiger und/oder beidseitiger Druck, Trägertyp und andere Attribute einer Druckproduktbeschreibung, die erforderlich sind, um einem Druckleistungsanbieter die Definition der fertigen Druckprodukte mitzuteilen, die hergestellt werden sollen. Die Produktzweckinformation definiert nicht die Steuerung eines bestimmten Fertigungsprozesses oder eine Vorrichtung, weil diese Informationen dem PPML/VDX-Ersteller normalerweise nicht bekannt sind. Diese Gerätesteuerungsparameter sind normalerweise nur dem Druckleistungsanbieter bekannt, der die ausgetauschten VDP-Auftragsdaten erhält. Der Druckleistungsanbieter muss daher die für seinen Produktions-Workflow zutreffenden Fertigungsspezifikationen aus dem Produktzweck, dem Layout und den Inhaltsdaten ableiten, die von dem Kunden erstellt worden sind.

Ein PPML/VDX-Fall wird durch einen datengesteuerten Verknüpfungsprozess erzeugt, der als Verknüpfungsvorrichtung von variablen Daten bezeichnet wird. Diese Verknüpfungsvorrichtung wird normalerweise innerhalb einer Erstellungsumgebung für variable Daten ausgeführt. Die Erstellungsumgebung kann sich an einem anderen Ort befinden als die Einrichtung, die die endgültigen Seiten der Dokumente mit variablen Daten druckt. In einigen Szenarios kann ein PPML/VDX-Fall in mehrere PPML/VDX-Fälle unterteilt sein, die sich zu verschiedenen Druckorten übertragen lassen. Die Erzeugung eines PPML/VDX-Falles durch die Verknüpfungsvorrichtung für variable Daten wird als abschließende Aktivität in dem recht komplexen Prozess zur Entwicklung von variablen Daten betrachtet. Der PPML/VDX-Fall lässt sich zu einem Druckproduktions-Workflow innerhalb derselben oder einer anderen Betriebsumgebung übertragen, in der er durch einen Druckvorstufen-Operator eingesehen werden kann, um ihn dann in einer für die endgültige Produktion vorgesehenen Form anzuordnen, die für den an dieser Stelle verwendeten Digitaldrucker geeignet ist.

Der PPML/VDX-Fall weist ein portables, ausbaufähiges Format auf, das für den Druck mit variablen Daten im Druckgewerbe ausgelegt ist. PPML/VDX ermöglicht Druckern mit dynamischen digitalen Druckeinrichtungen das Drucken mit variablen Daten, ohne Kenntnisse über 1:1-Marketing, variables Layout-Design oder Datenverarbeitung besitzen zu müssen. PPML/VDX ist jedoch ein endgültiges variables Daten- und Layoutformat, das geräteunabhängig ist. Daher unterstützt PPML/VDX nicht die Einbeziehung von Daten, die sich auf eine bestimmte Druckvorrichtung beziehen, wie Ausschießschemata, Trapping-Parameter (Unter-/Überfüllen), Traps oder Drucker- oder allgemeine Gerätesteuerungsinformationen. Daten, die bestimmte Informationen für eine Druckvorrichtung beinhalten, müssen daher später in der Druckvorstufe hinzugefügt werden, wenn der Druckauftrag für die Produktion vorbereitet wird.

Die vorausgehende Erörterung macht deutlich, dass Bedarf nach einem Verfahren und einer Vorrichtung besteht, die druckgerätespezifische Daten liefern kann, die in Verbindung mit PPML/VDX-Fällen nutzbar sind, um die Weiterentwicklung der Praxis des Druckens mit variablen Daten im Druckgewerbe zu ermöglichen.

Die vorliegende Erfindung betrifft die Probleme nach dem Stand der Technik, um die Praxis des Druckens mit variablen Daten im Druckgewerbe zu verbessern und die Produktion von VDP-Aufträgen zu erleichtern. Ein VDP-Auftrag besteht im vorliegenden Kontext der Erfindung aus Falldokumenten, die sich in Bezug auf die Art und Weise ihrer Herstellung deutlich voneinander unterscheiden. Beispielsweise können Falldokumente in ihrer Seitenlänge, in der Art der verwendeten Medien, in der Zahl der Seiten, die den Bebilderungsbereich überschreiten, in der Anzahl der Kopien und in der Weiterverarbeitung voneinander abweichen. Die Erfindung stellt eine VDP-Druckvorstufen-Workflow-Komponente dar, die dem Druckvorstufenoperator die Möglichkeit verleiht, die Daten des VDP-Auftrags zu analysieren und zu betrachten und dann den Auftrag innerhalb der digitalen Druckumgebung so einzurichten, dass der VDP-Auftrag optimal produzierbar ist.

Die erfindungsgemäße VDP-Druckvorstufen-Workflow-Komponente ist vorzugsweise ein Acrobat® Plug-in. Das Plug-in ist so konstruiert, dass jedes Merkmal für sich eigenständig ist, und dass sich die Merkmale schrittweise hinzufügen oder löschen lassen. Die VDP-Druckvorstufen-Workflow-Komponente ist in der Lage, den VDP-Auftrag für die Produktion zu analysieren, zu betrachten und vorzubereiten. Die Komponente gibt einen oder mehrere "produktionsreife" Aufträge aus.

Die zuvor genannte Aufgabe wird erfindungsgemäß durch Erstellen von Vorlagen gelöst, die im Drucken mit variablen Daten verwendbar sind, worin eine Datei einer Druckvorrichtung bereitgestellt wird, die Parameter in Bezug auf einen Druckauftrag enthält, aus der sich eine Vielzahl von Kategorien aus Parametern in der Datei erstellen lassen. Die Produktionsparameter werden für jede der Kategorien innerhalb der Kategorien erstellt. Der Druckvorrichtung wird eine Liste der Fertigungsmöglichkeiten entnommen. Es wird eine Vorlage für statisches Ausschießen ausgewählt, und in den Kategorien werden die Einträge Attributen der Druckvorrichtung zugeordnet, wie nach der Liste der Fertigungsmöglichkeiten oder Herstellungsmöglichkeiten festgelegt.

Die Erfindung wird im folgenden anhand in der Zeichnung dargestellter Ausführungsbeispiele näher erläutert.

Es zeigen
- Fig. 1a: eine Darstellung der Grundfunktionen, die für das Drucken mit variablen Daten nach der vorliegenden Erfindung erforderlich sind;
- Fig. 1b: eine Darstellung der bevorzugten Vorrichtung zur Ausführung der in Fig. 1a gezeigten Funktionen;
- Fig. 2: ein Diagramm zur Darstellung des Druckvorstufen-Workflows eines Druckauftrags von der Erstellung bis zur Produktion;
- Fig. 3: ein Ablaufdiagramm zur Darstellung des Verfahrens des bevorzugten Ausführungsbeispiels der vorliegenden Erfindung, das die Falldokumente kennzeichnet und diese nach gemeinsamen Eigenschaften, die als Familien bezeichnet werden, in Gruppen klassifiziert;
- Fig. 4: ein Ablaufdiagramm für die Erstellung von Familien innerhalb der vorliegenden Erfindung;
- Fig. 5: ein Ablaufdiagramm für ein optionales Verfahren, das dem Operator ermöglicht, abgeleitete Aufträge zu erstellen;
- Fig. 6: ein Ablaufdiagramm zur Darstellung der Erstellung von erfindungsgemäßen dynamischen Ausschießvorlagen.

Die vorliegende Erfindung beschreibt die Abfolge von Aktionen, die ein System für einen VDP-Auftrag (Variable Data Print) durchführt, so dass dieser effizient produzierbar ist. Das bevorzugte Ausführungsbeispiel sieht eine VDP-Druckvorstufen-Workflow-Komponente vor, die dem Druckvorstufenoperator ein benutzerfreundliches Mittel zur Produktion von VDP-Aufträgen bereitstellt. Ein VDP-Auftrag kann aus Falldokumenten bestehen, die sich in Bezug auf die Art und Weise, in der sie produziert werden, erheblich voneinander unterscheiden. Beispielsweise können sich Falldokumente in Bezug auf Seitenzahl, Medienart, Anzahl der Seiten, die den bebilderbaren Bereich überschreiten, Seitenlayout (einseitig gegenüber beidseitig), Formatlage (Hochformat gegenüber Querformat), Metadaten, Anzahl der Exemplare und Weiterverarbeitung unterscheiden. Die VDP-Druckvorstufen-Workflow-Komponente verleiht dem Druckvorstufenoperator die Möglichkeit, den VDP-Auftrag zu analysieren und zu betrachten und den VDP-Auftrag innerhalb der digitalen Druckumgebung unter Nutzung von Kenntnissen der Geräte einzurichten, die in der Umgebung zur Verfügung stehen, so dass der VDP-Auftrag optimal produzierbar ist.

Das bevorzugte Ausführungsbeispiel der vorliegenden Erfindung stellt die VDP-Druckvorstufen-Workflow-Komponente als ein Acrobat® Plug-in bereit. Das Acrobat® Plug-in ist vorzugsweise in einer modularen Architektur angeordnet, die jedem der zahlreichen Module eine Eigenständigkeit ermöglicht, so dass jedes der Module schrittweise hinzugefügt oder gelöscht werden kann. Die VDP-Druckvorstufen-Workflow-Komponente unterstützt das PPML/VDX-Dateiformat und ermöglicht es dem Druckvorstufenoperator, einen VDP-Auftrag für die Produktion zu analysieren, einzusehen und aufzubereiten. Die Ausgabe der erfindungsgemäßen VDP-Druckvorstufen-Workflow-Komponente ist eine Vielzahl von produktionsreifen Aufträgen.

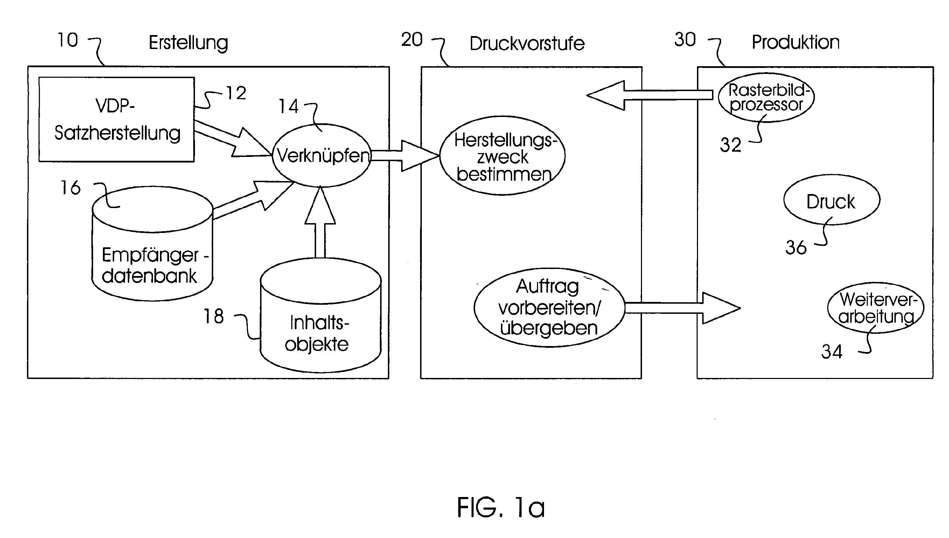

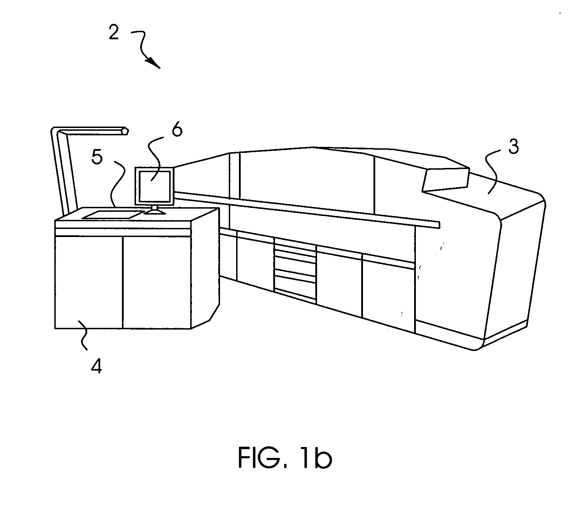

Fig. 1 a zeigt, wie ein VDP-Auftrag erfindungsgemäß in drei Grundbereichen durchgeführt wird. Der Erstellungsbereich 10 stellt die PPML/VDX-Datei für die Druckvorstufe 20 bereit. Erfindungsgemäße Schritte im Bereich der Druckvorstufe 20 dienen zur Aufbereitung des VDP-Auftrags für die Produktion 30. Fig. 1b zeigt ein digitales Drucksystem 2 des Typs NexPress 2100™, das eine grafische Benutzeroberfläche 6 und eine NexStation™ 4 für die Eingabe mit einer Eingabevorrichtung 5 und die Steuerung des Druckers 3 umfasst.

Der Erstellungsbereich 10 wird typischerweise von dem Grafikdesigner wahrgenommen, der dem statischen Inhalt variablen Inhalt mithilfe eines Mittels in der VDP-Satzherstellung hinzufügt, um den traditionellen statischen Designs, die durch Anwendungen, wie Quark® und In Design® erzeugt werden, variable Inhalte hinzuzufügen. Innerhalb des PPML/VDX-Standards lassen sich Informationen, die als Produktzweckdaten bezeichnet werden, in die PPML/VDX-Auftragsdaten einbinden, womit Informationen, wie erforderliche Medienarten und Bindungsarten, beschrieben werden. Diese Produktverwendungselemente werden in Form eines Jobtickets codiert (wie PJTF oder JDF). Der Bezug auf jede dieser Produktzweckeigenschaften erfolgt aus den PPML-Daten, so dass die in den PPML-Daten definierten Falldokumentdefinitionen mit einer Produktzweckdefinition bereitgestellt werden. Auf diese Weise werden die Eigenschaften der fertigen Dokumente, wie Art der Bindung, Medientypen, Anzahl der Exemplare und Anzahl der Seiten, die den Bebilderungsbereich überschreiten, und die sämtlich zur Definition des fertigen Druckprodukts beitragen, für ein gegebenes Dokument explizit spezifiziert. Die vorliegende Erfindung nutzt NexTreme™ als Werkzeug für die VDP-Satzherstellung 12 innerhalb des Erstellungsbereichs 10. NexTreme™ ist eine proprietäres Erstellungsanwendung von NexPress Solutions, LLC, das das PPML/VDX-Dokument für die Druckvorstufe 20 erzeugt und zusätzliche Metadaten in Form von Erweiterungen der variablen PPML/VDX-Daten erzeugt, die von NexTreme™ hinzugefügt werden. Diese Erweiterungen können Einträge sein, die aus der Empfängerdatenbank entnommen sind, wie Alter des Empfängers, Geschlecht, postalische Anschrift oder andere variable Daten, die speziell dem Empfänger zugeordnet sind. Der Erstellungsbereich 10 speichert diese Erweiterungen als Metadaten in dem PPML/VDX-Auftrag ab. Die Druckvorstufen-Workflow-Anwendung greift später im Workflow auf die Produktzweckinformation zu, einschließlich der Metadaten, die in dem PPML/VDX-Auftrag gespeichert sind, wie von dem Grafikdesigner mithilfe von NexTreme™ angegeben, um die optimale Jobticketspezifikation zum Drucken des Auftrags zu bezeichnen.

Innerhalb des bevorzugten Ausführungsbeispiels stammen die variablen Daten aus Daten in der Empfängerdatenbank 16, die die Zielgruppe charakterisieren. Dahinter steht die Absicht, dass das in hohem Maße individuell gestaltete Druckmaterial, das aus dem Variable Data Printing (Drucken mit variablen Daten) stammt, der Druckindustrie den Erfolg verschafft, der heute im Internet mit 1:1-Marketing erlebt wird. Bei dem Zusammenführen oder Verknüpfen 14 handelt es sich um einen Prozess, in dem Daten aus der Empfängerdatenbank 16 mit statischen Dateninhalten verknüpft werden, die sich in Inhaltsobjekten 18 befinden, um das verknüpfte PPML/VDX-Falldokument zu erzeugen. Zum besseren Verständnis der Beschreibung des Verknüpfungsvorgangs 14 folgt eine kurze Erörterung der hierarchischen Struktur einer VDX-Datei.

Eine VDX-Datei bezeichnet im vorliegenden Zusammenhang den VDX-Teil einer PPML/VDX-Datei. Die PPML/VDX-Datei stellt hauptsächlich die Nutzung von PPML (einer Implementierung der XML-Technik) zur Beschreibung der Position von PDF-Objekten auf jeder Seite eines VDP-Auftrags dar, der aus einem oder mehreren Falldokumenten besteht. Wie zuvor beschrieben, ist eine Authoring-Anwendung erforderlich, um einen PPML/VDX-Auftrag zu schaffen. Das bevorzugte Ausführungsbeispiel nutzt NexTreme™ (eine proprietäre VDP-Erstellungsanwendung von NexPress Solutions, LLC), aber es sind auch andere VDP-Erstellungsanwendung zur Durchführung der Erfindung verwendbar. Der Grafikdesigner erzeugt in der VDP-Satzherstellung 12 eine Vorlage, die aus statischen Bildern, Grafiken und Texten sowie aus variablen Bildern, Grafiken und Texten besteht. Den variablen Bestandteilen des Layouts sind Sätze von Regeln zugeordnet, die die Prozeduren beschreiben, die notwendig sind, um jedes Falldokument zu erzeugen. Ein Druckauftrag kann beispielsweise ein grafisches Feld umfassen, das für ein Bild eines Automobils als Werbemaßnahme für jede Person vorgesehen ist, die in einer Empfängerdatenbank aufgeführt ist, wobei die Entscheidung, welche variablen Daten für das Automobil verwendet werden, in etwa folgendermaßen aussehen könnte:
if (Einkommen>∈100000) then Lexus.pdf;
else if (Einkommen >∈50000) then Ford.pdf;
else Yugo.pdf.

Die Datenbank mit den Inhaltsobjekten 18 muss daher folgende PDF-Dateien enthalten: Lexus.pdf, Ford.pdf und Yugo.pdf.

Sobald der VDP-Auftrag in einem PPML/VDX-Dateiformat erstellt worden ist, erzeugt der Verknüpfungsprozess 14 ein Falldokument für jeden Satz in der Empfängerdatenbank 16. Die Empfängerdatenbank 16 ist eine Datei, die eine Datenbank von Sätzen enthält, die sich auf Metadaten der Empfänger beziehen. Beispielsweise könnte die Empfängerdatenbank 16 wie in der folgenden Tabelle 1 aufgebaut sein.

**Tabelle 1**

| Name | Einkommen | Alter |
|---|---|---|
| Jack Snow | ∈55000 | 25 |
| Bob Smith | ∈120000 | 55 |
| Jane Doe | ∈250000 | 45 |
| Sally Jones | ∈12000 | 21 |

Während des Verknüpfungsprozesses greift die VDP-Erstellungsanwendung jeweils auf einen Satz aus der Empfängerdatenbank 16 zu und erzeugt ein einzelnes Falldokument unter Verwendung der Vorlage, die statische und variable Bilder, Grafiken und Text enthält. Der Verknüpfungsprozess 14 wendet die statischen Objekte auf jedes der Falldokumente unter Verwendung der Regeln an, die von dem Autor für die Einbeziehung variabler Objekte definiert worden sind. In dem vorausgehenden Beispiel erzeugt der Verknüpfungsprozess 14 ein Falldokument (eine VDX-Datei) für Jack Snow. Der Verknüpfungsprozess 14 fügt dann ein Bild zum Falldokument für Jack Snow hinzu und wendet die Regeln an, die von dem Autor während des Erstellungsprozesses erstellt worden sind, worauf das System auf die Empfängerdatenbank 16 und die Datei Ford.pdf zugreift. Der Verknüpfüngsprozess 14 fügt dann die Datei Ford.pdf der VDX-Datei hinzu und erzeugt einen Eintrag im PPML-Bereich der Datei, der beschreibt, wo Ford.pdf auf einer bestimmten Seite für das Falldokument von Jack Snow anzuordnen ist. Das Ergebnis nach dem Verknüpfungsprozess 14 ist eine VDX-Datei mit einem PPML-Bereich, der ein Falldokument für jeden Satz in der Empfängerdatenbank 16 beschreibt, plus sämtliche Bild-, Grafik- und Textobjekte, die normalerweise aus einer Inhaltsdatenbank kommen.

Das bevorzugte Ausführungsbeispiel der vorliegenden Erfindung ist ein VDP-System, das eine skalierbare, durchgängige Lösung darstellt, die eine offene PDF-basierende Workflow-Architektur nutzt, die die Trennung von den VDP-Erstellungs- und den VDP-Druckproduktionsprozessen unterstützt. Die Trennung des VDP-Erstellungsprozesses von dem VDP-Druckproduktionsprozess hat die Erstellung von VDP-Druckvorstufen-Workflow-Komponenten als Instrument notwendig gemacht, das von dem Druckvorstufenoperator in der Druckvorstufe 20 genutzt werden kann, um den VDP-Druckauftrag optimal aufzusetzen, wie vom Produzenten des Auftrags beschrieben. Der VDP-Druckauftrag, der während des Druckvorstufenprozesses 20 von dem Druckvorstufenoperator empfangen wird, enthält ein oder Tausende von Falldokumenten, die keine Struktur aufweisen, was die Seiten pro Dokument, die Exemplare pro Dokument, Medien, Seiten, die den Bebilderungsbereich überschreiten sowie die Weiterverarbeitungsoptionen betrifft. Um die genaue und effiziente Herstellung des gesamten VDP-Auftrags zu ermöglichen, wie durch die PPML/VDX-Datei angegeben, stellt der Druckvorstufenprozess 20 Mittel zur Verfügung, um den VDP-Auftrag für den Produktionsprozess 30 zu analysieren, einzusehen und aufzubereiten. Während des Produktionsprozesses 30 wandelt der Rasterbildprozessor (RIP) 32 den Code für jedes Text- und Grafikelement auf jeder Seite in ein Format um, das von der Druckvorrichtung gedruckt werden kann. Nachdem der VDP-Auftrag gerastert worden ist, wird er gedruckt 36 und weiterverarbeitet 34.

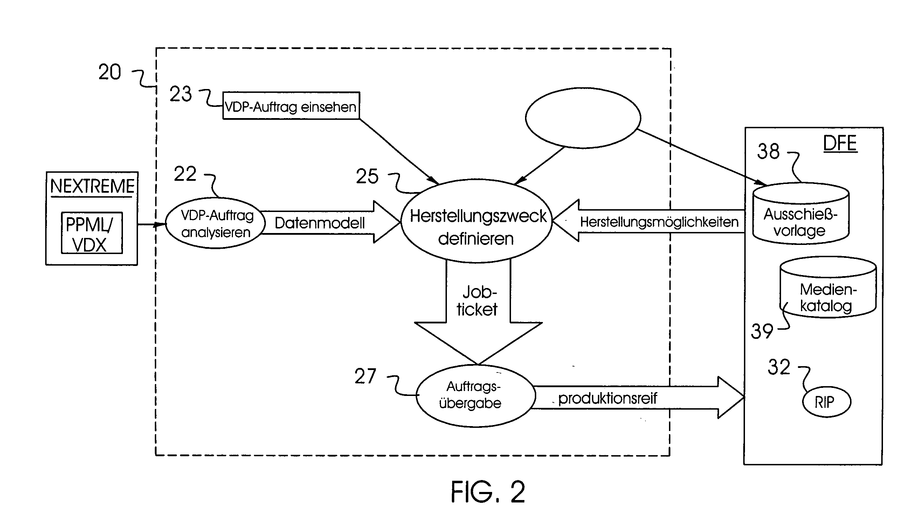

Fig. 2 zeigt ein Diagramm, das den von dem Druckvorstufenprozess 20 durchgeführten Workflow darstellt, nachdem dieser die PPML/VDX-Datei von dem Authoring-Prozess 10 übernommen hat. Der Druckvorstufenprozess 20 nimmt den VDP-Auftrag als Eingabe in Form einer PPML/VDX-Falldatei entgegen und erzeugt eine Ausgabe für den Produktionsprozess 30, bei dem es sich um einen druckfertigen VDP-Auftrag handelt.

Der VDP-Druckvorstufenprozess 20 ist vorzugsweise ein Acrobat® Plug-in und stellt eine Funktionalität mit dem typischen "Look and Feel" von Acrobat® Plug-ins bereit. Vorzugsweise ist der Druckvorstufenprozess 20 mit High-Level-Funktionen ausgestattet, die ihm die Möglichkeit verleihen, einen VDP-Auftrag einzusehen, zu analysieren, Produktionsparameter für einen VDP-Auftrag zu definieren, einen VDP-Auftrag zu erteilen, die Weiterverarbeitungsprüfung für einen VDP-Auftrag zu definieren und VDP-Aufträge durch Ableitung zu erstellen.

Wie ebenfalls in Fig. 2 gezeigt, ermöglicht das Verfahren "VDP-Auftrag einsehen" 23 dem Druckvorstufenoperator, die PPML/VDX-Datei in ihrer vorgesehenen Weiterverarbeitung einzusehen und eine PPML/VDX-Datei seitenweise so zu betrachten, wie sie der Kunde nach Druck und Weiterverarbeitung sehen würde. Der Druckvorstufenoperator öffnet die PPML/VDX-Datei in der Druckvorstufenumgebung, worauf die erste Seite des ersten Falldokuments angezeigt wird. Unter dem üblichen Acrobat® Lesezeichenregister ist die PPML/VDX-Datei nach Falldokumentgrenzen eingeteilt. Der Druckvorstufenoperator kann ein beliebiges Falldokumentlesezeichen auswählen und die erste Seite betrachten. Über die Funktion "VDP-Auftrag einsehen" 23 stehen dem Druckvorstufenoperator alle üblichen Acrobat® "Seite vor/Seite zurück"-Funktionen zur Betrachtung der PPML/VDX-Datei zur Verfügung. Die Funktion "VDP-Auftrag einsehen" 23 lässt sich ausführen, um eine PPML/VDX-Datei mit minimaler Leistungseinbuße im Vergleich zur Betrachtung reiner PDF-Dateien einzusehen.

Die PPML/VDX-Datei wird beim Öffnen geprüft, um festzustellen, ob sie "Valid" (gültig) oder "Well-Formed" (gut ausgebildet) ist. "Valid" und "Well-Formed" sind durch die Extensible Markup Language (XML) 1.0 spezifiziert und werden vom Druckvorstufenoperator angegeben. Innerhalb des bevorzugten Ausführungsbeispiels erkennt die VDP-Druckvorstufensoftware, dass sie eine VDP-Datei geöffnet hat und stellt die gesamte anwendbare VDP-Funktionalität zur Verfügung. Bei Öffnen der PPML/VDX-Datei wird zunächst die erste Seite des ersten Dokuments geöffnet. Der Druckvorstufenoperator betrachtet die weiteren Seiten durch Verwendung der üblichen Acrobat® Navigationswerkzeuge.

Das bevorzugte Ausführungsbeispiel der Erfindung benutzt Systemsoftware, um PPML/VDX-Dateien als zusammengesetzte PPML/VDX-Seiten zu betrachten (vorab ausgeschossene PPML/VDX-Seiten). In der Standardbetrachtungsebene der Systemsoftware werden alle PPML/VDX-Dateien als zusammengesetzte PPML/VDX-Dateien betrachtet. Die Systemsoftware unterstützt die übliche Acrobat® Navigation von Seiten in einer PPML/VDX-Datei, indem diese auf der Benutzeroberfläche mit eindeutigen, numerischen Bezeichnern für jedes Falldokument angezeigt werden. Der eindeutige Bezeichner entspricht der von oben ausgehenden Reihenfolge des Falldokuments in der PPML/VDX-Datei. Das erste Falldokument ist das Falldokument Nr. 1.

Das bevorzugte Ausführungsbeispiel ermöglicht die Betrachtung der PPML/VDX-Seiten in einer PPML/VDX-Datei im Vergleich zu PDF-Dateien mit geringfügigen oder gar keinen Leistungseinbußen, da eine PPML/VDX-Datei so wie eine reine PDF-Version des Inhalts betrachtet werden kann. Das bevorzugte Ausführungsbeispiel unterstützt zudem die üblichen Acrobat® Lesezeichen für die Bezeichnung von Falldokumenten innerhalb von Falldokumenten. Zudem unterstützt die Systemsoftware des bevorzugten Ausführungsbeispiels vorab ausgeschossene Ansichten der PPML/VDX-Dateien innerhalb der Netzumgebung der Anwendung. Die Systemsoftware unterstützt zudem vorab ausgeschossene und ausgeschossene Bogenansichten von PPML/VDX-Dateien innerhalb einer zugänglichen NexStation™ 4 Umgebung. Es sei darauf hingewiesen, dass dies die Unterstützung von Teilen der proprietären Schnittstelle zur NexStation™ 4 umfasst.

Das bevorzugte Ausführungsbeispiel ermöglicht das Betrachten einer bestimmten Seitenzahl eines Falldokuments derart, dass das folgende Navigieren über die Tasten "Seite vor/Seite zurück" dazu führt, dass zu der Seitenzahl des vorherigen/nächsten Falldokuments navigiert wird, soweit diese vorhanden ist.

Die Funktion "VDP-Auftrag einsehen" 23 führt eine Funktion durch, die das Betrachten der PPML/VDX-Datei in ihrer zu druckenden (weiterverarbeiteten) Form ermöglicht. Dadurch kann ein Druckvorstufenoperator Bogen einer PPML/VDX-Datei nacheinander so einsehen, wie diese Bogen nach dem Drucken aussehen würden. Sobald der Druckvorstufenoperator eine PPML/VDX-Datei mit der Druckvorstufenkomponente erfolgreich geöffnet hat, kann er über die grafische Benutzeroberfläche 6 die Option wählen, die Datei in ausgeschossener Form zu betrachten. Falls der PPML/VDX-Datei bereits ein Adobe Jobticket (PJTF oder JDF) zugeordnet ist, zeigt der Betrachter die Oberfläche des ausgeschossenen Bogens. Diese Ansicht umfasst das Seitenlayout, relevante Dokumentmarken (Beschnitt, Falzung, Beschnittzugabe, Strichcodes) und Anmerkungen. Das bevorzugte Ausführungsbeispiel liefert in dieser Ansicht keine Lesezeichen, weil es keine Regel gibt, die Falldokumente daran hindert, sich auf Bogenflächen zu überlagern. Der Druckvorstufenoperator kann alle üblichen Acrobat® Funktionen für "Seite vor/Seite zurück" verwenden, um die PPML/VDX-Datei einzusehen. Eine minimale Leistungseinbuße ist beim Betrachten einer PPML/VDX-Datei in der ausgeschossenen Ansicht zu erwarten, wenn man dies mit dem Betrachten einer PPML/VDX-Datei in der vorausgeschossenen Ansicht vergleicht.

Damit der Druckvorstufenoperator die Funktion "VDP-Auftrag einsehen" 23 ausführen kann, öffnet die Systemsoftware zunächst die PPML/VDX-Datei, und ein Adobe® Jobticket (PJTF oder JDF) wird der PPML/VDX-Datei zugeordnet, um das Ausschießlayout für den VDP-Druckauftrag zu beschreiben. Der Druckvorstufenoperator wählt eine Option über die grafische Benutzeroberfläche 6, die es ermöglicht, die PPML/VDX-Datei so einzusehen, wie sie in ausgeschossener Form gedruckt würde. Der Druckvorstufenoperator kann weitere Seiten mithilfe der üblichen Navigationsmittel von Acrobat® einsehen. Das bevorzugte Ausführungsbeispiel sieht vor, die PPML/VDX-Datei in einer ausgeschossenen Form zu betrachten, indem die Layoutparameter eines Adobe® Jobtickets (PJTF und JDF) unterstützt werden. Die Betrachtung einer Bogenoberfläche einer PPML/VDX-Datei, wie durch das zugehörige Adobe® Jobticket angegeben, erfolgt mit den entsprechenden Merkmalen, wie Seitenlayout, Dokumentmarken (Beschnitt, Falzung, Beschnittzugabe, Strichcodes) und Anmerkungen. Die Systemsoftware liefert ausgeschossene Ansichten der PPML/VDX-Dateien innerhalb der Netzumgebung der Anwendung. Ausgeschossene Ansichten der PPML/VDX-Dateien innerhalb einer zugänglichen NexStation™ 4 Umgebung werden ebenfalls unterstützt. Dementsprechend wird das bevorzugte Ausführungsbeispiel in einer Weise beschrieben, die sich speziell auf eine NexPress™ 2100 Umgebung bezieht, wobei allerdings Abwandlungen selbstverständlich möglich sind, die sich leicht auf andere Teile der Einrichtung übertragen lassen.

Die Funktion "VDP-Auftrag einsehen" 23 ermöglicht dem Druckvorstufenoperator, eine PPML/VDX-Datei mit jeweils einem PDF-Objekt nacheinander einzusehen. Um die Betrachtung eines einzelnen PDF-Objekts abzuschließen, stellt das System die PPML/VDX-Dateien als eine Folge frei zugänglicher PDF-Objekte bereit. Nachdem der Druckvorstufenoperator eine PPML/VDX-Datei erfolgreich mit der Software für den Druckvorstufenprozess 20 geöffnet hat, wird die Option zur Betrachtung der Datei als frei zugängliche Liste von PDF-Objekten gewählt. Die Betrachtung der PPML/VDX-Datei als Liste von PDF-Objekten kann bei der Fehlerbereinigung in der Darstellung des PPML/VDX-Inhalts hilfreich sein. In dieser Ansicht liegen keine Lesezeichen vor, da die Objekte in dieser Ansicht unabhängig von jeder Seite oder von jedem Falldokument sind. Der Druckvorstufenoperator kann sämtliche Acrobat® "Seite vor/Seite zurück"-Standardfunktionen nutzen, um die PPML/VDX-Datei zu betrachten.

Das Verfahren "VDP-Auftrag analysieren" 22 ermöglicht dem System, alle Falldokumente in dem VDP-Auftrag zu kennzeichnen, so wie sie vom Produzenten nach dem Erstellungsprozess 10 geliefert werden. Die Kennzeichnung durch das Verfahren "VDP-Auftrag analysieren" 22 liefert Informationen, die es dem Druckvorstufenoperator ermöglichen, den gesamten VDP-Auftrag genau und effizient herzustellen. Ein VDP-Auftrag in dem bevorzugten Ausführungsbeispiel kann aus einem oder mehr als 10.000 Falldokumenten bestehen. Die Falldokumente können sich voneinander beispielsweise durch Seitenzahl, Anzahl der Seiten, die den bebilderbaren Bereich überschreiten, Anzahl der Exemplare, Weiterverarbeitung, wie z.B. Klebebindung oder Rückstichheftung, einseitiges oder beidseitiges Kopf-an-Kopf-Layout oder beidseitiges Kopf- and Fuß-Layout sowie durch die Formatlage, wie Querformat oder Hochformat, unterscheiden. Falldokumente können Abwandlungen im Bereich der logischen Reihenfolge der erforderlichen Medien unterscheiden: A4, A4, A4; A4, A4, A4, A4; A4, A4, A3 und A3, A3, A3, A3, A3. Zudem können Metadaten in den Falldokumenten wechseln. Metadaten im Kontext eines VDP-Auftrags beziehen sich typischerweise auf Informationen, die aus der Empfängerdatenbank entnommen sind und einem Falldokument zugeordnet werden. Beispielsweise kann eine Datenbank ein Feld aufweisen, das die Postleitzahl jeder Person enthält, die eine Broschüre erhält. Die VDP-Erstellungsanwendung kann es dem Autor ermöglichen, den Wert jeder Postleitzahl des Empfängers dem resultierenden Falldokument im Element "Private-Info" einer PPML/VDX-Datei zuzuordnen. Diese Metadateninformation lässt sich später im Workflow als Variante einer VDP-Familie nutzen.

Jede Variante in den Falldokumenten ist wichtig, da Varianten die Art und Weise beeinflussen, in der das gedruckte Dokument produziert wird, was wiederum die Wahl einer Vorrichtung betreffen kann oder die Weise, in der eine bestimmte Vorrichtung benutzt wird und vor allem das Ausschießschema.

Die Funktion "VDP-Auftrag analysieren" 22 charakterisiert alle Falldokumente in einem Druckauftrag und platziert die charakterisierten Falldokumente in Gruppen, die hier als VDP-Familien bezeichnet werden. Eine VDP-Familie ist eine Gruppe von Falldokumenten mit identischen Werten für den Satz von Variantenparametern, die von dem Druckvorstufenoperator in einem VDP-Auftrag gewählt werden. Aus der Liste von VDP-Familien und deren entsprechenden Parametern kann der Druckvorstufenoperator ermitteln, wie der gesamte VDP-Auftrag herzustellen ist. Dank der Charakterisierung aus der Funktion "VDP-Auftrag analysieren" 22 ist der Druckvorstufenoperator in der Lage, die Herstellung jeder VDP-Familie individuell zu wählen oder einige oder alle VDP-Familien gemeinsam in vorbestimmter Weise herzustellen. Gruppierte VDP-Familien lassen sich in gleicher Weise herstellen, oder es lassen sich einige Mitglieder der Gruppen von VDP-Familien mit einer oder mehreren gleichen Herstellungsvarianten herstellen.

Damit der Druckvorstufenoperator während des Druckvorstufenprozesses 20 in dem VDP-Auftrag navigieren kann, muss die VDP-Auftragsfunktionalität analysiert werden. Dies erfolgt im bevorzugten Ausrührungsbeispiel durch Wahl eines Registers für "VDP-Auftrag analysieren" 22, das dem "Look and Feel" in Acrobat® entspricht. Der Druckvorstufenoperator kann somit auswählen, welche VDP-Familienvarianten zu unterscheiden sind. Das könnte in der Bereitstellung entsprechender Auswahlfelder für jede der folgenden Varianten resultieren: Seitenzahl, Medienfolge, Seiten, die den bebilderbaren Bereich überschreiten, Kopienzahl, Layoutfolge, Ausrichtungsfolge, Meta-Daten und Weiterverarbeitung. Der Druckvorstufenoperator klickt auf eine Schaltfläche, die die VDP-Auftragsanalyse initiiert. Die Softwarekomponente für den VDP-Druckvorstufen-Workflow durchsucht den gesamten XML-Bereich der PPML/VDX-Datei und unterteilt die Falldokumente in VDP-Familien, die einen eigenen Parametersatz darstellen, wie anhand der von dem Druckvorstufenoperator gewählten Variantenliste spezifiziert. Der VDP-Druckvorstufenprozess 20 zeigt in einem deutlich formatierten Textfeld für jede Familie die Anzahl der enthaltenen Falldokumente an sowie den Parameterwert jeder Variante. Hierzu ein Beispiel:

### Familie 1 -

Enthält 935 Falldokumente
Seitenzahl = 6
Medienfolge = A4, A4, A4, A4, A4, A4
Überschreitet den bebilderbaren Bereich auf Seite = keine
Anzahl Exemplare = 1
Weiterverarbeitung = Binden
Layoutfolge = einseitig, beidseitig Kopf-an-Kopf, beidseitig Kopf-an-Kopf, beiseitig Kopf-an-Kopf, beidseitig Kopf-an-Kopf, einseitig
Formatlagefolge = Hochformat, Hochformat, Hochformat, Hochformat, Hochformat, Hochformat
Meta-Daten: Zip Code = 12345

### Familie 2 -

Enthält 60 Falldokumente
Seitenzahl = 7
Medienfolge = A4, A4, A4, A4, A4, A4, A4
Überschreitet den bebilderbaren Bereich auf Seite = keine
Anzahl Exemplare = 1
Weiterverarbeitung = Binden
Layoutfolge = einseitig, einseitig, beidseitig Kopf-an-Kopf, beidseitig Kopf-an-Kopf, beiseitig Kopf-an-Kopf, beidseitig Kopf-an-Kopf, einseitig
Formatlagefolge = Querformat, Hochformat, Hochformat, Hochformat, Hochformat, Hochformat, Hochformat
Meta-Daten: Zip Code = 55555

### Familie 3 -

Enthält 5 Falldokumente
Seitenzahl = 6
Medienfolge = A4, A4, A4, A4, A4, A4
Überschreitet den bebilderbaren Bereich auf Seiten = 1, 3, 6
Anzahl Exemplare = 1
Weiterverarbeitung = Binden
Layoutfolge = einseitig, beidseitig Kopf-an-Fuß, beidseitig Kopf-an-Fuß, beiseitig Kopf-an-Fuß, beidseitig Kopf-an-Fuß, einseitig
Formatlagefolge = Hochformat, Hochformat, Hochformat, Hochformat, Hochformat, Hochformat
Meta-Daten: Zip Code = 98765

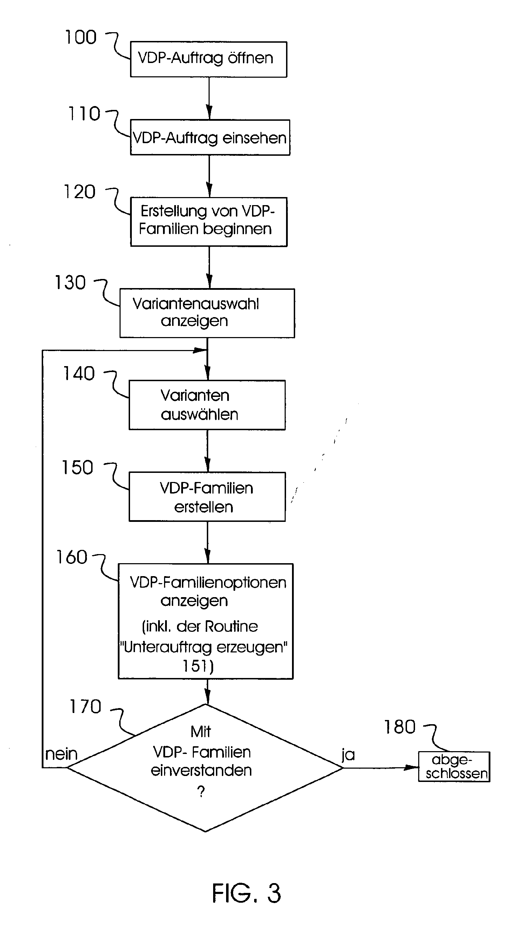

Fig. 3 zeigt ein Ablaufdiagramm des vom bevorzugten Ausführungsbeispiel der vorliegenden Erfindung verwendeten Verfahrens, das für die Charakterisierung aller Falldokumente sowie für deren Anordnung in als VDP-Familien bezeichneten Gruppen zuständig ist. Eine VDP-Familie ist eine Gruppe von Falldokumenten innerhalb eines VDP-Auftrags, die äquivalente Werte für den vom Druckvorstufenoperator gewählten Variantensatz enthält. Es sei darauf hingewiesen, dass ein äquivalenter Wert im Kontext der vorliegenden Erfindung entweder ein Einzelwert oder ein Bereich von Werten ist, dem jedes Falldokument in einer VDP-Familie entspricht. Anhand der Liste der VDP-Familien und deren entsprechenden Varianten sollte der Druckvorstufenoperator eindeutig ermitteln können, wie der gesamte VDP-Auftrag herzustellen ist. Dank der PPML/VDX-Analyse kann sich der Druckvorstufenoperator dazu entscheiden, jede Familie gesondert herzustellen oder einzelne oder alle Familien zu gruppieren und in gleicher Weise herzustellen.

Wie in Fig. 3 gezeigt, ist "VDP-Auftrag öffnen" 100 der Einstiegspunkt in ein Verfahren, in dem der Druckvorstufenoperator die VDP-Druckvorstufen-Workflow-Komponente öffnet, was im Falle der vorliegenden Erfindung das Öffnen eines VDP-Auftrags umfasst. "VDP-Auftrag einsehen" 110 ruft die Funktion "VDP-Auftrag einsehen" 23 auf, wie bereits zuvor besprochen, und ermöglicht dem Operator, die gesetzte Form des VDP-Auftrags einzusehen, wie sie in der Workflow-Anwendung vorliegt. Hierzu wird auf der grafischen Benutzeroberfläche 6 ein Anwendungsmenü aufgeschlagen, und der Druckvorstufenoperator veranlasst die Erstellung von VDP-Familien durch Wahl von "Erstellung von VDP-Familen beginnen" 120 aus dem Anwendungsmenü. Die Wahl von "Erstellung von VDP-Familen beginnen" 120 durch den Druckvorstufenoperator veranlasst die Aktivierung von "Variantenauswahl anzeigen" 130. "Variantenauswahl anzeigen" 130 ist eine von der grafischen Benutzeroberfläche 6 erzeugte Anzeige, die eine Vielzahl von Variantenparametern darstellt und dem Druckvorstufenoperator ermöglicht, Varianten mithilfe eines entsprechenden Werkzeugs auszuwählen, nach der Falldokumente in VDP-Familien sortiert werden. "Varianten auswählen" 140 ist der Prozess, durch den der Druckvorstufenoperator Varianten aus einer Kombination von Auswahlfeldern und Texteingabefeldern auswählt, die durch "Variantenauswahl anzeigen" 130 bereitgestellt werden. Die von dem Druckvorstufenoperator gewählten Varianten werden zur Erstellung von VDP-Familien verwendet. Beispiele für Varianten sind Seiten pro Falldokument, Anzahl gewünschter Exemplare, verwendete Medien, Weiterverarbeitung, Seiten, die den bebilderbaren Bereich überschreiten, Seitenlayout, Seitenausrichtung, Meta-Daten usw.

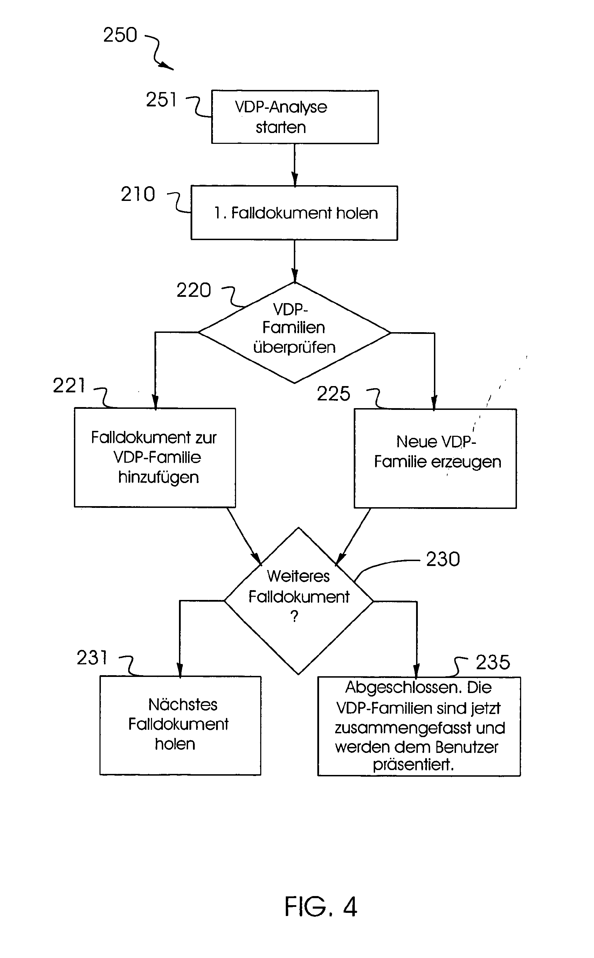

Der Druckvorstufenoperator wählt die zu verwendenden Varianten, während die Erstellung von VDP-Familien durch "VDP-Familien erstellen" 150 erfolgt (Fig. 4 zeigt ein detaillierteres und nachfolgend erläutertes Ablaufdiagramm von "VDP-Familien erstellen" 150). Sobald "VDP-Familien erstellen" 150 durchgeführt worden ist, liefert "VDP-Familienoptionen anzeigen" 160 dem Druckvorstufenoperator eine Liste von VDP-Familien, die aus den ausgewählten Varianten erzeugt worden ist, und zwar mit der Anzahl von Falldokumenten, die jeder Familie zugeordnet ist, sowie den entsprechenden Werten der Varianten. "Mit VDP-Familien einverstanden" 170 kann der Druckvorstufenoperator angeben, ob die Liste der VDP-Familien in dieser Weise erwünscht ist. Wenn der Druckvorstufenoperator nicht einverstanden ist, kann er dies über eine Eingabe auf der grafischen Benutzeroberfläche 6 kenntlich machen, worauf das Verfahren zu "Varianten auswählen" 140 zurückkehrt, um eine andere Parameterliste auswählen zu können. Sobald der Druckvorstufenoperator mit der Liste der VDP-Familien einverstanden ist, nimmt er einen entsprechenden Eintrag über die grafische Benutzeroberfläche 6 vor, worauf die Erstellung der VDP-Familien "abgeschlossen" 180 ist. Es sei darauf hingewiesen, dass VDP-Familien derart ausgewählt werden, dass der gesamte VDP-Auftrag in Gruppen von Falldokumenten unterteilt wird, die sich in gleicher Weise herstellen lassen, was insgesamt zu einer Verbesserung in Bezug auf die Zuverlässigkeit und Effizienz bei der Ausführung eines VDP-Auftrags führt.

"Unterauftrag erzeugen" 151 ist ein optionales Verfahren, das unter "VDP-Familienoptionen anzeigen" 160 bereitgestellt wird. "Unterauftrag erzeugen" 151 kann von dem Operator nach "VDP-Familien erstellen" 150 ausgeführt werden. "Unterauftrag erzeugen" 151 wird benutzt, wenn der Operator der Auffassung ist, dass der VDP-Auftrag für einen einzelnen Auftrag zu groß ist, oder aus anderen Gründen, die dafür sprechen, Aufträge zu erzeugen, die Untermengen des VDP-Auftrags sind. "Unterauftrag erzeugen" 151 wird später noch detaillierter erläutert.

Fig. 4 ist ein Ablaufdiagramm zur Darstellung des Verfahrens "VDP analysieren" 250, die zur Durchführung der Funktion "VDP-Auftrag analysieren" 22 benutzt wird und Falldokumente sortiert, um zu ermitteln, welcher VDP-Familie ein Falldokument zuzuordnen ist. Wie zuvor erwähnt, werden VDP-Familien durch eine Softwarekomponente erzeugt, die als "VDP-Familien erstellen" 150 bezeichnet ist und einen VDP-Auftrag entgegen nimmt, der viele einzelne Unterdokumente (Falldokumente) umfasst und diese in Gruppen äquivalenter Varianten, der so genannten VDP-Familien, sortiert. "VDP analysieren" 250 beginnt, nachdem der VDP-Auftrag in den Druckvorstufenprozess 20 eingetreten und die Erstellung des VDP-Auftrags in dem verwendeten Dateiformat erfolgt ist. Das bevorzugte Ausführungsbeispiel verwendet für das Erstellung des VDP-Auftrags ein PPML/VDX-Dateiformat. Dem Durchschnittfachmann auf diesem Gebiet ist bekannt, dass auch andere Dateiformate anstelle von PPML/VDX verwendbar sind. Bevor das in Fig. 4 dargestellte Verfahren "VDP-Familien erstellen" 150 ausgeführt werden kann, wird die VDP-Auftragsdatei geöffnet (im bevorzugten Ausführungsbeispiel eine VDX-Datei). Der Druckvorstufenoperator wählt dann die gewünschten Varianten aus, und das Sortierverfahren wird über die grafische Benutzeroberfläche 6 initiiert.

Die in der PPML/VDX-Datei enthaltene VDP-Auftragsbeschreibung hat für den VDP-Auftrag zahlreiche Varianten. Diese Varianten können folgendes umfassen: Seiteninhalt, Medientypen, Anzahl der Exemplare, Seiten, die den Bebilderungsbereich überschreiten und Weiterverarbeitung. Die Varianten werden von dem Druckvorstufenoperator angegeben und bewirken eine Gruppierung, die als Parameter verwendbar ist. Eine Gruppe von Falldokumenten in einem VDP-Auftrag mit äquivalenten Varianten lässt sich anhand von Varianten als Parametern sortieren, um die VDP-Familie zu suchen. Im bevorzugten Ausführungsbeispiel der Erfindung wird eine VDP-Familie im Allgemeinen anhand von ca. 5 Parametern ermittelt, wobei allerdings die Anzahl der Parameter schwanken kann und wobei die tatsächliche Anzahl von Parametern weniger als 5 oder sogar nur einen einzigen Parameter umfassen kann. Der Operator wählt die Liste von Parametern, die zur Sortierung von Falldokumenten in einer bestimmten VDP-Familie dient, durch Eingabe der gewünschten Varianten über die grafische Benutzeroberfläche 6. Es sind auch VDP-Familien mit einer vorbestimmten Liste von Parametern möglich, die die Eigenschaften einer VDP-Familie bestimmen. Ein Beispiel einer vorbestimmten VDP-Familie ist ein Sortierverfahren mit drei Varianten als Parameter, das die VDP-Familie charakterisieren, wie Anzahl der Seiten pro Dokument, Weiterverarbeitungsbedarf und Medien. Die Wahl der Parameter impliziert vorzugsweise, welche Varianten der Druckvorstufenoperator als relevant für die Herstellung des Druckauftrags erachtet. Vorzugsweise wird jedes Falldokument pro Sortiervorgang genau in einer VDP-Familie sortiert. Wenn ein anderer Sortiervorgang mit anderen Varianten durchgeführt wird, wird ein bestimmtes Falldokument einer anderen VDP-Familie gemäß dieser Sortieroperation zugeordnet. Es sei darauf hingewiesen, dass zwar die Zuordnung jedes Falldokuments zu nur einer einzigen Familie der bevorzugte Weg zur Ausführung der Erfindung ist, dass aber andere Gruppierungen ebenfalls möglich sind, worin ein Falldokument mehreren Familien gleichzeitig zugeordnet ist, wie es dem Durchschnittsfachmann auf diesem Gebiet unmittelbar klar ist.

Das Verfahren "VDP analysieren" 250 beginnt mit dem Verfahrensschritt "VDP-Analyse starten" 251 mit einem VDP-Auftrag, wie in der PPML/VDX-Datei definiert, sowie einer Variantenliste, die von dem Operator zur Erzeugung von VDP-Familien bereitgestellt wird. Danach beginnt der Verfahrensschritt "1. Falldokument holen" 210 mit einem leeren Satz von VDP-Familien und empfängt das erste Falldokument in dem VDP-Auftrag. Dieses erste Falldokument wird dann untersucht, um zu ermitteln, ob eine vorhandene VDP-Familie einen passenden Satz von Varianten aufweist.

In dem Verfahrensschritt "VDP-Familien überprüfen" 220 werden die von dem Druckvorstufenoperator gewählten Varianten mit den Varianten verglichen, die in der PPML/VDX-Datei für das erste Falldokument aufgelistet sind, um zu ermitteln, ob ein VDP-Familie vorhanden ist, deren Parameter mit den im aktuellen Falldokument aufgeführten äquivalent ist. Die vom Druckvorstufenoperator wählbaren Varianten umfassen: Seitenzahl, Medientypen, Kopienzahl, Seiten, die den bebilderbaren Bereich überschreiten, Weiterverarbeitung, Seitenlayout, Seitenausrichtung, Meta-Daten und andere mögliche Varianten. Die Liste der möglichen Varianten ist keine geschlossene Liste; die vorliegende Erfindung sieht zudem vor, dass auch andere Varianten verwendbar sind. Im Verfahrensschritt "VDP-Familien überprüfen" 220 wird geprüft, ob die gewählten Varianten in diesem Falldokument vorhanden sind, und ob eine Übereinstimmung für eine VDP-Familie vorliegt, die bereits für diesen VDP-Auftrag erstellt worden ist. Wenn in dem Falldokument Varianten vorhanden sind, die sich nicht in der von dem Druckvorstufenoperator angegebenen Parametergruppe befinden, wird der Verfahrensschritt "Neue VDP-Familie erzeugen" 225 ausgeführt, wodurch ein neues Element erzeugt wird, das eine Übereinstimmung mit dem vorliegenden Falldokument aufweist. "Neue VDP-Familie erzeugen" 225 erzeugt ein neues Element der VDP-Familie mit Parameterwerten, die mit dem aktuellen Falldokument übereinstimmen, und fügt das aktuelle Falldokument zum neuen VDP-Familienmitglied hinzu. Wenn die von dem Druckvorstufenoperator angegebenen Varianten in dem Falldokument gefunden werden, wird das Falldokument innerhalb des Verfahrensschritts "Falldokument zur VDP-Familie hinzufügen" 221 der passenden VDP-Familie zugeordnet, worauf das aktuelle Falldokument zur der VDP-Familie hinzugefügt wird, die äquivalente Parameterwerte aufweist, wie vom Benutzer ausgewählt.

In dem Verfahrensschritt "Weitere Falldokumente" 230 wird die Liste der Falldokumente untersucht, um zu ermitteln, ob weitere Falldokumente in dem VDP-Auftrag enthalten sind. Falls weitere Falldokumente innerhalb des Verfahrensschrittes "VDP analysieren" 250 sortiert werden müssen, wird in dem Verfahrensschritt "Nächstes Falldokument holen" 231 das nächste Falldokument geholt und wonach zu dem Verfahrensschritt "VDP-Familien überprüfen" 220 zurückgekehrt wird, um die Varianten zu vergleichen, die in der PPML-Datei für dieses nächste Falldokument aufgeführt sind, und eine VDP-Familie zu suchen, die mit den aufgelisteten Varianten übereinstimmt. Die zuvor für "VDP-Familien überprüfen" 220 besprochenen Schritte werden dann wiederholt. Die Liste der Falldokumente wird sortiert, bis eine falsche Antwort auf "Weitere Falldokumente" 230 eine Rückkehr zum aufrufenden Verfahrensschritt bewirkt und der Sortiervorgang abgeschlossen ist.

Sobald das Verfahren "VDP analysieren" das Sortierverfahren abschließt, wird in dem Verfahrensschritt "abgeschlossen" 235 eine Zusammenfassung der VDP-Familien für den Druckvorstufenoperator erzeugt, die es dem Druckvorstufenoperator ermöglicht, den gesamten VDP-Auftrag zu verstehen und genau und effizient zu verarbeiten. Die Analyse bewirkt ein Einsortieren jedes Falldokuments in eine VDP-Familie und eine Beschreibung der Charakteristik jeder VDP-Familie, damit der Druckvorstufenoperator den NexStation™ Drucker anweisen kann, den Auftrag in der gewünschten Weise herzustellen. Die Anweisungen an die NexStation™ 4 zum Drucken jeder VDP-Familie sind in einer als Jobticket bezeichneten Datenstruktur enthalten. Das Jobticket hat vorzugsweise das Format PJTF (Portable Job Ticket Format), bei dem es sich um ein Standarddateiformat handelt, das von dem Adobe® Jobticket erzeugt wird und branchenweit verbreitet ist. Zwar verwendet das bevorzugte Ausführungsbeispiel der vorliegenden Erfindung das PJTF-Format, aber es ist vorgesehen, das zukünftige Ausführungsbeispiele auch ein anderes Format unterstützen, das als JDF (Job Definition Format) bekannt ist. Nachdem das Ergebnis der VDP-Analyse verfügbar ist und die VDP-Familien identifiziert sind, wählt/erzeugt der Druckvorstufenoperator ein Jobticket, um den Auftrag zu drucken. Das Jobticket wird in einem Standarddateiformat geschrieben, das mit Software auf der NexStation™ 4 kompatibel ist. Die NexStation™ 4 versteht daher die Informationen in der Auftragsdatei, also welche Medien zu verwenden sind, wie die Bogen auszuschießen sind, ob die Bogen einseitig oder beidseitig sind oder wie die Weiterverarbeitung vorzunehmen ist. Sobald ein Jobticket erzeugt worden ist, kann es der PPML-Datei hinzugefügt und zur Ausführung an die NexStation™ 4 übergeben werden. Anhand der Analyseergebnisse weiß der Druckvorstufenoperator auf Anhieb, wie jede Familie aussieht und wie viele Falldokumente sich in jeder VDP-Familie befinden, so dass er ein Jobticket erzeugen kann, das für jede VDP-Familie ideal geeignet ist. Das jeder VDP-Familie zugeordnete Jobticket teilt der NexStation™ 4 dann mit, welche Medientypen für jeden Bogen zu verwenden sind, wie die Seiten auf den Bogen auszuschießen sind, wie viele Exemplare anzufertigen sind, wie die Weiterverarbeitung vorzunehmen ist, usw.

Der Druckvorstufenprozess 20 stellt eine übliche Acrobat® Benutzeroberfläche zur Verfügung, um die Funktion "VDP-Auftrag analysieren" 22 für eine PPML/VDX-Datei zu starten. Die Acrobat® Standardbenutzeroberfläche unterstützt die Spezifikation praktisch jeder Kombination von Varianten (auch Platzhalter), die die Funktion "VDP-Auftrag analysieren" 22 als Kriterien zur Erzeugung von VDP-Familien nutzt (d.h. eine Spalte von Varianten, die jeweils ein entsprechendes Auswahlfeld aufweisen. Eine Variantenliste besteht beispielsweise aus Seitenzahl, Medientypen, Exemplare, Anzahl der Seiten, die den Bebilderungsbereich überschreiten, Weiterverarbeitung sowie allen Varianten, die explizit durch "PRIVATE_INFO" in der PPML/VDX-Datei angegeben werden. Der Druckvorstufenprozess 20 lässt die Eingabe einer gültigen Hierarchie von PPML/VDX-Tags und -Attributen als Variante zu (etwa zur Differenzierung von Auftragsfamilien nach Postleitzahl in PRIVATE_INFO:

<PRIVATE_INFO><Zip_Code>12345</Zip_Code><PRIVATE_INFO>). Die Ergebnisse der Funktion "VDP-Auftrag analysieren" 22 werden auf der grafischen Benutzeroberfläche 6 in Form eines klar formatierten Textfeldes dargestellt, wobei für jede Familie die Anzahl der enthaltenen Falldokumente und die Parameterwerte jeder Variante angezeigt werden.

Nach Öffnen einer PPML/VDX-Datei und Ausführen des Verfahrensschritts "VDP-Familien erstellen" 150, wie in Fig. 3 gezeigt, stehen dem Druckvorstufenoperator mehrere Möglichkeiten zur Wahl, die durch den Verfahrensschritt "VDP-Familienoptionen anzeigen" 160 angezeigt werden. Eine dieser Möglichkeiten ist "Unterauftrag erzeugen" 151. Werkzeuge zur Auswahl eines Satzes von Falldokumenten werden durch die Druckvorstufen-Workflow-Softwarekomponente bereitgestellt. Nach Abschluss der Auswahl der Falldokumentmenge für den neuen Auftrag wird der neue Auftrag als vollständige PPML/VDX-Datei gespeichert.

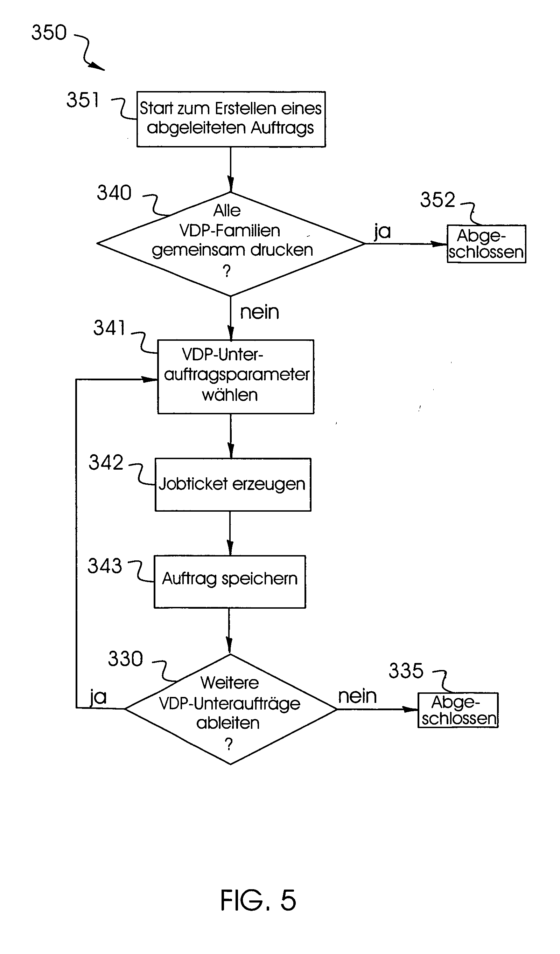

Das in Fig. 5 gezeigte Verfahren "Abgeleiteten Auftrag erstellen" 350 ist ein optionales Verfahren, das nach dem Verfahren "VDP analysieren" 250 ausgeführt werden kann, indem man "Unterauftrag erzeugen" 151 in "VDP-Familienoptionen anzeigen" 160 wählt. Der Verfahrensschritt "Unterauftrag erzeugen" 151 ruft das Verfahren "Abgeleiteten Auftrag erstellen" 350 auf, das es dem Druckvorstufenoperator ermöglicht, mehrere kleinere Druckaufträge aus größeren Druckaufträgen zu erzeugen. Die Systemsoftware unterstützt die Erstellung neuer VDP-Aufträge als Untermengen eines größeren VDP-Auftrags in den Fällen, in denen der Operator es vorzieht, einen Druckauftrag als eine Gruppe kleinerer VDP-Aufträge herzustellen. Um Unteraufträge eines größeren VDP-Auftrags herzustellen, wird ein Werkzeug benötigt, das eine Untermenge der Falldokumente aus einem VDP-Auftrag entnimmt und einen neuen VDP-Unterauftrag erzeugt. Der Verfahrensschritt "Start zum Erstellen eines abgeleiteten Auftrags" 351 fasst VDP-Familien zusammen, die mit dem Verfahren "VDP analysieren" 250 ermittelt worden sind, und stellt die VDP-Familien dem Druckvorstufenoperator über die grafische Benutzeroberfläche 6 zur Verfügung. Wenn der Druckvorstufenoperator den Verfahrensschritt "Unterauftrag erzeugen" 151 aus dem Verfahrensschritt "VDP-Familienoptionen anzeigen" 160 nicht auswählt, ermittelt das System sofort, dass der Verfahrensschritt "Alle VDP-Familien als Einzelauftrag drucken" 340 gewünscht wird, wodurch das Verfahren "Abgeleiteten Auftrag erstellen" 350 als "Abgeschlossen" 352 gilt. Falls der Druckvorstufenoperator den Verfahrensschritt "Start zum Erstellen eines abgeleiteten Auftrags" 351 innerhalb des Verfahrensschrittes "VDP-Familienoptionen anzeigen" 160 wählt, wird im Verfahrensschritt "VDP-Unterauftragsparameter wählen" 341 dem Druckvorstufenoperator eine Auswahl auf der grafischen Benutzeroberfläche 6 bereitgestellt, die Falldokumente und VDP-Familien umfasst. Der Druckvorstufenoperator kann aus dem VDP-Stammauftrag Falldokumente oder Bereiche von Dokumenten als Parameter für den abgeleiteten VDP-Unterauftrag auswählen. Der Druckvorstufenoperator kann zudem ganze VDP-Familien als Parameter für den abgeleiteten VDP-Unterauftrag verwenden. Bei Auswahl der Parameter zur Erzeugung des abgeleiteten VDP-Unterauftrags wird in dem Verfahrensschritt "Jobticket erzeugen" 342 eine Herstellungsspezifikation aus dem abgeleiteten VDP-Auftrag erzeugt. In dem Verfahrensschritt "Auftrag speichern" 343 wird dann der abgeleitete VDP-Unterauftrag gespeichert. Der Druckvorstufenoperator erhält eine Abfrage durch den Verfahrensschritt "Weitere VDP-Unteraufträge ableiten" 330, der bei positiver Beantwortung durch den Druckvorstufenoperator den Verfahrensschritt "VDP-Unterauftragsparameter wählen" 341 erneut anstößt. Wenn der Druckvorstufenoperator keine weiteren VDP-Unteraufträge ableiten möchte, der Verfahrensschritt "Abgeschlossen" 335 zum Hauptverfahren für die VDP-Familie zurück.

Zusammenfassend gesagt, erzeugen die folgenden Ereignisfolgen neue Unteraufträge aus den ursprünglichen PPML/VDX-Aufträgen. Der Druckvorstufenoperator wählt "VDP-Auftrag analysieren" 250 aus.

Der Druckvorstufenoperator wählt "Abgeleiteten Auftrag erstellen" 350 aus.

Die Druckvorstufen-Workflow-Softwarekomponente stellt auf einer grafischen Benutzeroberfläche einen Satz von Falldokumenten bereit, die in den neuen Auftrag übernommen werden können.

Der Druckvorstufenoperator wählt "Neuen Auftrag speichern".

Um das Verfahren "Abgeleiteten Auftrag erstellen" 350 in dem bevorzugten Ausführungsbeispiel auszuführen, wie über die grafische Benutzeroberfläche 6 bereitgestellt, sammelt das System über die Funktion "Neuen Auftrag speichern" alle ausgewählten Falldokumente aus einer Liste in einer neuen PPML/VDX-Datei, zusammen mit allen bezogenen PDF-Inhalten. Die Software ist als ein Acrobat® Plug-in ausführbar und unterstützt alle typischen Acrobat® Dateioperationen (öffnen, schließen, speichern, speichern unter) für *.vdx-Dateien. Das bevorzugte Ausführungsbeispiel sieht die Erkennung der gesamten VDX-Semantik in einer *.vdx-Datei vor.

Die Systemsoftware sieht die Zuordnung zu einer DTD vor. Eine DTD ist eine Datei, die überprüft, ob eine XML (PPML)-Datei richtig formatiert ist und mit dem Verwendungszweck übereinstimmt, wobei der Verwendungszweck hier die Nutzung als PPML/VDX-Datei ist. Eine Alternative zu einer DTD ist ein so genanntes Schema. Es sind diese beiden Verfahren zur Prüfung der Struktur einer PPML/VDX-Datei möglich. Die Systemsoftware stellt zudem die Option bereit, den XML-Bereich der PPML/VDX-Datei auf "valid" (gültig) oder "well-formed" (gut ausgebildet) zu prüfen. Im vorliegenden Ausführungsbeispiel ermöglicht die Systemsoftware nicht die Bearbeitung einer PPML/VDX-Datei aus der Acrobat® Umgebung heraus, wobei allerdings darauf hingewiesen sei, dass ein Durchschnittfachmann auf diesem Gebiet die Möglichkeit zur Bearbeitung der PPML/VDX-Datei in der Acrobat® Umgebung vorsehen kann.

Die in Fig. 2 gezeigte Funktion "Herstellungszweck definieren" 25 wird von dem Druckvorstufenprozess 20 ausgeführt, um die Produktionsparameter zu definieren, die für die Herstellung des Auftrags nach Verwendungszweck zuständig sind. "Definiere Herstellungszweck" 25 ist eine Funktion, die die Produktionsparameter genau und effizient festlegt, um den Druckauftrag gemäß Spezifikation in einer PPML/VDX-Datei zu drucken und zu bearbeiten. Der Druckvorstufenoperator sollte das Leistungsvermögen der Vorrichtung kennen, um die optimale Art und Weise für Druck und Weiterverarbeitung eines PPML/VDX-Auftrags zu bestimmen. Eine der Funktionen von "Definiere Herstellungszweck" 25 besteht daher in der Abfrage der Druckvorrichtung nach ihren "Herstellungsmöglichkeiten" (im Falle des vorliegenden Ausführungsbeispiels also die NexStation™ 4). Zu den "Herstellungsmöglichkeiten" der Vorrichtung zählen der "Medienkatalog", der "Statische Ausschießvorlagenkatalog" und die "Weiterverarbeitungsmöglichkeiten". Die Kommunikation zwischen der Druckvorstufenkomponente (Druckvorstufenprozess 20) und der Produktionskomponenten für den PPML/VDX-Auftrag (Produktionsprozess 30) stellt eine Liste der verfügbaren Medientypen bereit, die dem Medienkatalog 39 entnommen ist. Der Druckvorstufenoperator ordnet jedes logisch in der VDP-Familie angegebene Medium einem physischen Medientyp zu, wie im Medienkatalog 39 der Vorrichtung gemäß Herstellungsmöglichkeiten aufgeführt. Es wird eine Ausschießvorlage ausgewählt, die jedes Falldokument der VDP-Familie genau und effizient druckt. Eine Ausschießvorlage für eine VDP-Familie lässt sich auf verschiedene Weise angeben:
- Auswahl einer Ausschießvorlage aus dem "statischen Ausschießvorlagenkatalog" der Vorrichtung (im Falle des bevorzugten Ausführungsbeispiels eine NexStation™ 4)
- Keine Angabe einer Ausschießvorlage, womit zugelassen wird, dass die Vorrichtung das Ausschießen nach ihrer Standardvorlage vornimmt
- Zuordnen eines Jobtickets aus dem Dateisystem, das eine "statische Ausschießvorlage enthält"
- Auswählen von Parametern zur Angabe einer einfachen (einseitigen) "statischen Ausschießvorlage"

Die Wahl einer statischen Ausschießvorlage für eine VDP-Familie umfasst die Berücksichtigung der Zuordnung der logisch angegebenen Medien und Weiterverarbeitungsspezifikationen in der PPML/VDX-Datei bezüglich des physischen Leistungsvermögens der Vorrichtung. PPML/VDX-Seiten müssen einen logischen Mediennamen tragen (wie z.B. "Formbrief", "Einlagel" oder "Bevorzugter Papiertyp"), den der Druckvorstufenoperator einem bestimmten Papier in dem Medienkatalog der Vorrichtung gemäß Übereinkunft zwischen ihm und dem Hersteller des PPML/VDX-Auftrags festlegt (wie z.B. "Hammermill #06200-8"). Die VDP-Familie kann eine logisch angegebene Weiterverarbeitungsanforderung umfassen (z.B. "Rückstichheftung" oder "Klebebindung"), die wiederum der physischen Weiterverarbeitungsfunktion der Vorrichtung zugeordnet und in einem Adobe® Jobticket definiert werden muss. Die Anzahl der von jedem Falldokument zu erstellenden Exemplare in der VDP-Familie ist ebenfalls zu berücksichtigen. Es gibt Fälle (z.B. Visitenkarten, Postkarten), in denen mehrere Kopien desselben Falldokuments in gleicher Lage ausgeschossen werden sollen. Die Zuordnung einer statischen Ausschießvorlage und eines Jobtickets weist die Vorrichtung an, die VDP-Familie genau und effizient zu produzieren.

Die vorliegende Erfindung nutzt ein System und ein Verfahren, das hier als dynamische Ausschießvorlage bezeichnet wird. Eine dynamische Ausschießvorlage stellt im Wesentlichen einen Satz statischer Ausschießvorlagen dar. Eine statische Ausschießvorlage ist jeder VDP-Familie zugeordnet. Typischerweise ist jeweils eine andere statische Ausschießvorlage einer anderen VDP-Familie zugeordnet. Die dynamische Ausschießvorlage ist ein Mittel, das die Zuordnung von Attributen des vom Autor vorgesehenen Zwecks der gedruckten und weiterverarbeiteten Drucksache, wie in einem VDP-Auftrag angegeben, zu dem physischen Leistungsvermögen der gewählten Vorrichtung ermöglicht (z.B. einer NexStation™ 4).

Eine statische Ausschießvorlage stellt im Wesentlichen einen Satz von Regeln zur Zuordnung der Seiten eines Falldokuments für eine einzelne VDP-Familie zu den Medienbogen dar, die der gewählten Vorrichtung bekannt sind (also Medien, die zum Medienkatalog der Vorrichtung gehören). Eine statische Ausschießvorlage kann nach verschiedenen Verfahren angegeben werden, beispielsweise, aber nicht abschließend: Auswählen einer Ausschießvorlage aus dem statischen Ausschießvorlagenkatalog der Vorrichtung (im Falle des bevorzugten Ausführungsbeispiels eine NexStation™ 4); keine Angabe einer Ausschießvorlage, womit zugelassen wird, dass die Vorrichtung das Ausschießen nach ihrer Standardvorlage vornimmt; Zuordnen eines Jobtickets aus dem Dateisystem, das eine "statische Ausschießvorlage enthält"; Auswählen von Parametern zur Angabe einer einfachen (einseitigen) "statischen Ausschießvorlage".

Die Erfindung sieht das Einrichten von Produktionsparametern für das genaue und effiziente Drucken des Auftrags gemäß PPML/VDX-Datei vor.

Um die optimale Weise für Druck und Weiterverarbeitung eines VDP-Auftrags gemäß PPML/VDX-Datei(en) zu bestimmen, muss der Druckvorstufenoperator zunächst Kenntnis von dem geltenden Leistungsvermögen der Druckvorrichtung besitzen. Die Druckvorstufen-Workflow-Softwarekomponente muss daher die Vorrichtung nach ihren "Herstellungsmöglichkeiten" abfragen. Das bevorzugte Ausführungsbeispiel der vorliegenden Erfindung setzt einen Digitaldrucker 3 des Typs NexPress™ 2100 mit einer NexStation™ 4 ein. Es sei darauf hingewiesen, dass sich die hier vorliegende Beschreibung gemäß der Hardware abwandeln lässt, die für andere Arten von Druckvorrichtungen 3 bereitgestellt werden. Zu den "Herstellungsmöglichkeiten" der Vorrichtung zählen der "Medienkatalog", der "statische Ausschießvorlagenkatalog" und die "Weiterverarbeitungsmöglichkeiten". Der Medienkatalog ist ein Katalog/eine Liste zur genauen Beschreibung jeder Papiersorte, die der Vorrichtung bekannt ist und von dieser unterstützt wird, beispielsweise: Brief, A4, weiß, 80 g, ungelocht usw. Der statische Ausschießvorlagenkatalog ist eine Liste von Ausschießvorlagen, die der Vorrichtung bekannt sind und von dieser unterstützt werden, beispielsweise kann eine Vorlage als 2 Seiten Querformat, beidseitig auf A3 definiert sein. Die Weiterverarbeitungsmöglichkeiten stellen eine Liste der Weiterverarbeitungsoptionen dar, die von der Vorrichtung/dem System unterstützt werden, wie Heften, versetzt Stapeln, Broschürenherstellung, Beschneiden usw.

Die Herstellung eines VDP-Auftrags nach Spezifikation durch eine PPML/VDX-Datei gemäß dem bevorzugten Ausführungsbeispiel der Erfindung beginnt damit, dass der Druckvorstufenoperator eine "dynamische Ausschießvorlage" definiert und die dynamische Ausschießvorlage einer PPML/VDX-Datei zuweist. Eine dynamische Ausschießvorlage ist ein Satz von statischen Ausschießvorlagen. Eine statische Ausschießvorlage bezeichnet im vorliegenden Kontext eine einzelne Ausschießvorlage, die das Layout eines üblichen Druckauftrags beschreibt. Sie beschreibt ein einzelnes Layout für einen gesamten Auftrag und ist normalerweise einem Jobticket in einem normalen Auftrag (keinem VDP-Auftrag) zugeordnet. Der Begriff statische Ausschießvorlage dient im vorliegenden Zusammenhang zur Abgrenzung des Begriffs der statischen Ausschießvorlage von der dynamischen Ausschießvorlage. Da eine dynamische Ausschießvorlage ein Satz statischer Ausschießvorlagen ist, besitzt eine dynamische Ausschießvorlage mehrere Layouts. In dem bevorzugten Ausführungsbeispiel wird genau eine Ausschießvorlage von der dynamischen Ausschießvorlage benutzt, um das Layout für die Falldokumente in jeder VDP-Familie zu beschreiben. Eine weitere Unterscheidung zwischen der Verwendung statischer Ausschießvorlagen und erfindungsgemäßer dynamischer Ausschießvorlagen besteht darin, dass das Ausschießen jedes Falldokuments einer VDP-Familie nach einer einzigen statischen Ausschießvorlage erfolgt, ähnlich wie bei einem Einzelauftrag.

Die Wahl einer statischen Ausschießvorlage für eine VDP-Familie wird durch mehrere Faktoren beeinflusst, wie Seitenzahl, Medienfolge, Zahl der Seiten, die den Bebilderungsbereich überschreiten, Anzahl der Exemplare, Layoutfolge, Formatlagenfolge, Meta-Daten und Weiterverarbeitung, um nur einige Attribute zu nennen, die den Druckvorstufenoperator zur Wahl einer bestimmten statischen Ausschießvorlage für eine VDP-Familie veranlassen kann. Die VDP-Familie kann logische Angaben für Medien ("Inhalt", "Deckblatt", "Einlage") oder Weiterverarbeitung ("Rückstichheftung", "Klebebindung") enthalten, die physischen Medien ("Hammermill #06200-8") und Weiterverarbeitungsfunktionen der Vorrichtung zugeordnet und in einem Jobticket definiert sein müssen. Die Anzahl der in einer VDP-Familie zu produzierenden Falldokumente ist ebenfalls zu berücksichtigen. Es gibt einige Fälle (z.B. Visitenkarten, Postkarten), in denen das Ausschießen mehrere Exemplare desselben Falldokuments in einer bestimmten Ausrichtung erfolgen soll. Die Seitenausrichtung oder Formatlage (Hochformat zu Querformat) sowie das Seitenlayout (einseitig zu beidseitig) sind Faktoren, die der Druckvorstufenoperator bei der Wahl einer statischen Ausschießvorlage zu berücksichtigen hat.

Sobald die VDP-Analyse 250 erfolgt ist und die Kategorisierung der VDP-Familien stattgefunden hat, wird jede VDP-Familie einer statischen Ausschießvorlage zugeordnet. Sobald alle VDP-Familien einer statischen Ausschießvorlage zugeordnet worden sind, bildet der Satz der ausgewählten Vorlagen die dynamische Ausschießvorlage des VDP-Auftrags. Im vorliegenden Kontext ist der VDP-Auftrag tatsächlich eine PPML/VDXbasierende Datei, bei der eine *.vdx Datei mit einer entsprechenden PPML-Formatierung die Position der bezogenen PDF-Objekte auf den VDX-Seiten beschreibt, die Teil einer Vielzahl von Falldokumenten sind. Der PPML/VDX-basierende Auftrag kann in einer einzelnen Datei oder in mehreren Dateien vorliegen. Wenn es sich um mehrere Dateien handelt, gibt es zwar nur eine *.vdx Datei, aber die bezogenen PDF-Objekte können in einer externen Datei vorliegen. In einem Auftrag mit mehreren Dateien könnte die Datei, die die PPML-Beschreibung enthält, als die PPML/VDX-Datei bezogen werden, während die anderen Dateien die unterstützenden PDF-Dateien sind. Wenn ein VDP-Auftrag dem Druckvorstufenprozess 20 oder der Druckvorstufe übergeben wird, wird die Datei mit der PPML-Beschreibung übergeben, wobei Bezüge auf die externen PDF-Dateien explizit erfolgen müssen, damit der Empfänger diese finden kann.

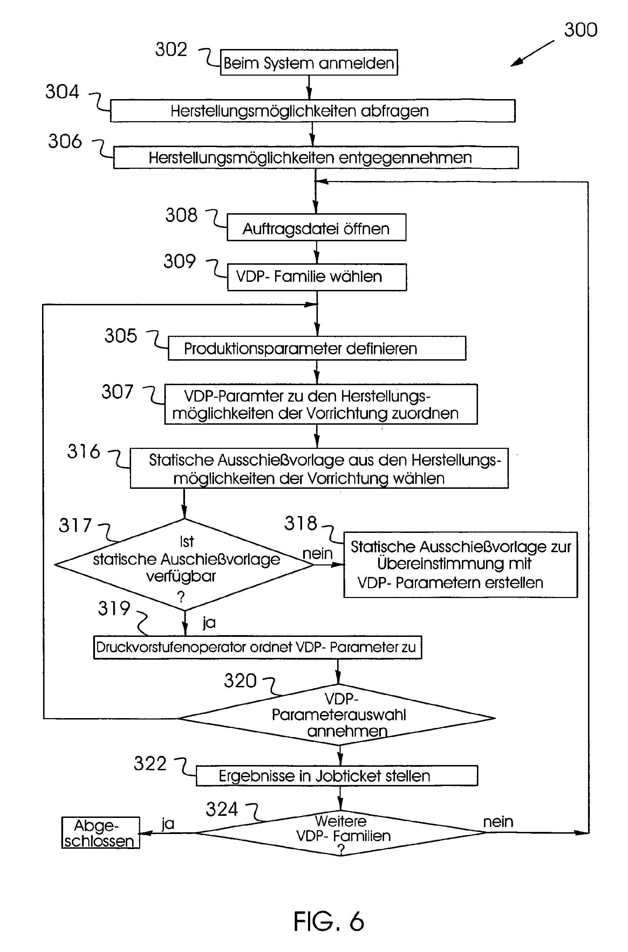

Fig. 6 zeigt ein Ablaufdiagramm eines Verfahrens zur Erstellung dynamischer Ausschießvorlagen 300. Der Druckvorstufenoperator meldet sich beim System an 302, was in dem bevorzugten Ausführungsbeispiel das Anmelden an einer NexStation™ 4 umfasst, um das Verfahren zu beginnen. Die Abfrage nach den Herstellungsmöglichkeiten 304 ermöglicht es dem Druckvorstufenoperator, die ausgewählte Vorrichtung (NexStation™ 4) nach den Herstellungsmöglichkeiten abzufragen, die das System bietet. Die Anwendungsprogrammschnittstelle (API / Application Programm Interface) und die Datenstruktur unterstützen diese Abfrage. Die API umfasst alle von einer Vorrichtung unterstützten Funktionen. Die vorliegende Erfindung sieht ein Systemdesign vor, das Verarbeitungsfünktionen bereitstellt, die einen Satz von Funktionen ausführen können, um die gewünschten Informationen zu extrahieren. Im bevorzugten Ausführungsbeispiel übernimmt die NexStation™ 4 diese Funktionen. Die Datenstruktur für die NexStation™ 4 ist darauf ausgelegt, Angaben zur Beschreibung der Herstellungsmöglichkeiten der Druckvorrichtung zu liefern. Die Herstellungsmöglichkeiten werden in Form von XML-Blöcken bereitgestellt, die die notwendigen Informationen enthalten. Die notwendigen Informationen umfassen Einträge wie Medienkatalog, Ausschießvorlagen, Weiterverarbeitungsoptionen und maximale Auftragsgröße, die in Antwort auf eine Abfrage nach den Weiterverarbeitungsmöglichkeiten der NexStation™ 4 geliefert werden.

In dem Verfahrensschritt "Herstellungsmöglichkeiten entgegennehmen" 306 werden die Angaben zu den Herstellungsmöglichkeiten von der NexStation™ 4 entgegengenommen, die als Antwort auf den Verfahrensschritt "Herstellungsmöglichkeiten abfragen" 304 gegeben werden.

Sobald das Verfahern 300 zur dynamischen Ausschießvorlage die Herstellungsmöglichkeiten des Systems abgefragt hat, kann der Druckvorstufenoperator aus dem zuvor besprochenen Verfahren "VDP-Familien erstellen" 150 nach dem Öffnen der "VDP-Auftragsdatei" 308 eine VDP-Familie wählen 309. Die VDP-Familie liefert die Daten, die von dem Verfahrensschritt "Produktionsparameter definieren" 305 zur Herstellung der Untermenge des VDX-Auftrags benötigt werden.

Der Verfahrensschritt "VDP-Parameter zu den Herstellungsmöglichkeiten der Vorrichtung zuordnen" 307 wird von dem Druckvorstufenoperator durchgeführt. Alle Informationen, die der Druckvorstufenoperator benötigt, und die noch nicht bekannt sind, werden der Kommunikation mit dem VDX-Auftragsproduzenten entnommen. Der Druckvorstufenoperator ordnet dann die logisch angegebenen Medien aus der VDP-Familie physischen Medienarten zu, wie laut Medienkatalog der Herstellungsmöglichkeiten der Vorrichtung unterstützt. Der Autor des VDX-Auftrags kommuniziert typischerweise mit dem Druckvorstufenoperator über Telefon oder e-Mail. Im Kontext der vorliegenden Erfindung wird allerdings jede PPML/VDX-Seite durch einen logischen Mediennamen beschrieben, wie vom Autor angegeben (beispielsweise Medien="Deckblatt", "Hammermill#123456789 oder nur "Jims Lieblingspapier"). Der Druckvorstufenoperator entscheidet dann, welches physische Medium jedem der logisch angegebenen Medienarten zugeordnet werden soll, oder er bittet den Kunden, die Zuordnung selbst vorzunehmen.

In dem Verfahrensschritt "Statische Ausschießvorlage aus den Herstellungsmöglichkeiten der Vorrichtung wählen" 316 werden sämtliche verfügbaren Optionen präsentiert, um eine statische Ausschießvorlage zu wählen, mit der sich jedes Falldokument der VDP-Familie genau und effizient drucken lässt. Im Verfahrensschritt "Ist statische Ausschießvorlage verfügbar" 317 wird, ob die gewünschte statische Ausschießvorlage derzeit verfügbar ist. Wenn die gewünschte statische Ausschießvorlage nicht verfügbar ist, wird in dem Verfahrensschritt "Statische Ausschießvorlage zur Übereinstimmung mit VDP-Parametern erstellen" 318 eine statische Ausschießvorlage erstellt, die den angegebenen VDP-Parametern entspricht. Die Erfindung sieht vor, dass SignaStation®, Preps oder ein anderes Programm zur Erstellung von Ausschießvorlagen verwendbar ist, um statische Ausschießvorlagen zu erzeugen. Im Rahmen des bevorzugten Ausführungsbeispiels ist vorgesehen, die neue Ausschießvorlage durch Aktualisieren der Herstellungsmöglichkeiten bereit zu stellen.

In dem Verfahrensschritt "Druckvorstufenoperator ordnet VDP-Parameter zu" 319 wird dem Druckvorstufenoperator ermöglicht, die in der VDP-Familie logisch spezifizierte Weiterverarbeitung einer physischen Weiterverarbeitungsoption zuzuordnen, die in den Angaben zu den Weiterverarbeitungsfunktionen unterstützt wird, wie in den Herstellungsmöglichkeiten der Vorrichtung angegeben. Alle Informationen, die der Druckvorstufenoperator benötigt, werden durch die Kommunikation mit dem VDX-Auftragsproduzenten erfasst.

Nach Überprüfen aller ausgewählten Produktparameter hat der Druckvorstufenoperator mit dem Verfahrensschritt "VDP-Parameterauswahl annehmen" 320 die Möglichkeit, die Auswahl für die VDP-Familie anzunehmen oder abzulehnen. Falls der Druckvorstufenoperator die Auswahl annimmt, wird der Verfahrensschritt "Ergebnisse in Jobticket stellen" 322 durchgeführt, und das Jobticket wird anhand der Ergebnisse dieser Auswahl aktualisiert, womit der Herstellungszweck gemäß der Produktionsparameter beschrieben und zudem bezeichnet wird, auf welche Falldokumente in dem VDX-Auftrag dieser Produktionsparametersatz anzuwenden ist. Das bevorzugte Ausführungsbeispiel erzeugt ein Jobticket im PJTF-Format (Portable Job Ticket Format). PJTF ist ein von Adobe® entwickelter Industriestandard, der im vorliegenden Ausführungsbeispiel Verwendung findet, um einer Druckvorrichtung des Typs NexStation™ Anweisungen zur Herstellung eines Auftrags zu erteilen, dem Durchschnittsfachmann auf diesem Gebiet klar ist, dass auch andere Formate verwendbar sind, um das Adobe® Jobticket zu erzeugen, wie das Job Description Format (JDF). JDF ist weiter entwickelt und moderner als PJTF. JDF stellt einen neuen Standard dar, der zwar zur Zeit noch nicht die Verbreitung von PJTF erfährt, aber der zur Darstellung des Jobtickets besonders vorgesehen ist. Wenn der Druckvorstufenoperator nach Überprüfung sämtlicher ausgewählter Produktionsparameter indem Verfahrensschritt "VDP-Parameterauswahl annehmen" 320 diese Frage abschlägig beantwortet, kehrt die das Verfahren zum Verfahrensschritt "Produktionsparameter definieren" 305 zurück, so dass der Druckvorstufenoperator die Möglichkeit hat, eine andere statische Ausschießvorlage zu wählen.

Der Verfahrensschritt "VDP-Familie wählen" 309 bis "VDP-Parameterauswahl annehmen" 320 werden für jede VDP-Familie wiederholt, die durch das Verfahren "VDP analysieren" 250 bestimmt wird. Der Druckvorstufenoperator bestätigt, dass alle VDP-Familien einwandfrei für die Produktion spezifiziert sind.

Das bevorzugte Ausführungsbeispiel verwendet eine grafische Benutzeroberfläche 6 als Benutzerschnittstelle, die die Ergebnisse des Verfahrens "VDP analysieren" 250 darstellt, um alle erforderlichen Produktionsparameter für jede VDP-Familie angeben zu können. Die Liste der erforderlichen Parameter, die für jede VDP-Familie aus den Herstellungsleistungsleistungen anzugeben sind, lautet wie folgt: vorgegebener physischer Medientyp für alle VDX-Seiten, denen kein logischer Medientyp explizit zugewiesen ist; ein physischer Medientyp für jeden angegebenen logischen Medientyp; eine statische Ausschießvorlage; die Anzahl der Exemplare für jedes Falldokument, das in der VDP-Familie zu produzieren ist sowie die Weiterverarbeitung. Die Erfindung ermöglicht es dem Druckvorstufenoperator, zu bestätigen, das die Produktionsauswahl für alle VDP-Familien komplett ist. Falls gewünscht, brauchen nicht alle VDP-Familien zur Produktion gewählt werden.

Die Erfindung setzt die bestätigte Auswahl der Produktionsparameter für alle VDP-Familien in Adobe® Jobtickets um. Die von dem bevorzugten Ausführungsbeispiel verwendete Datenstruktur ist ein Satz von PJTF- oder JDF-Dateien, die in der PPML/VDX-Datei gemäß der Adobe® PDF-Spezifikation eingebettet sind. Obwohl das bevorzugte Ausführungsbeispiel die Verwendung von PJTF oder JDF für Adobe® Jobtickets vorsieht, sind auch andere Formate verwendbar. Die Erfindung sieht vor, regelbasierendes Verknüpfen von Jobtickets zu unterstützen. Das Verknüpfen von Jobtickets ist erforderlich, wenn der aktuelle VDX-Auftrag mit Jobtickets aktualisiert wird, nachdem ein ursprüngliches Jobticket bereits in dem VDX-Auftrag eingebettet worden ist.

Die Erfindung bettet zugeordnete Adobe® Jobtickets in der VDX-Datei ein, wie von Adobe® für PDF-Dateien angegeben.

Die Systemsoftware der vorliegenden Erfindung ist in der Lage, die Produktionsparameter eines PPML/VDX-Auftrags zu definieren, indem die gesamte Datei als eine einzige Familie behandelt wird. Diese Funktionalitätsebene wird in Verbindung mit dem Vermögen betrachtet, einen Auftrag mit mehreren VDP-Familien in Unteraufträge mit je einer VDP-Familie zu unterteilen. Die Funktionalität zur Behandlung des PPML/VXD-Auftrags als eine einzelne Datei ermöglicht die Produktion eines PPML/VDX-Auftrags als Einzeldatei mit mehreren VDP-Familien.

Sobald die PPML/VDX-Datei von der Druckvorstufenkomponente (Druckvorstufenprozess 20) geöffnet worden ist, erhält der Druckvorstufenoperator die Ergebnisse das Verfahren "VDP-Auftrag analysieren" 22 (vergleiche Fig. 2). Um die Produktionsparameter zu definieren, wählt der Druckvorstufenoperator eine Vorrichtung (im bevorzugten Ausführungsbeispiel NexStation™ 4) und fragt die Vorrichtung (NexStation™ 4) nach ihren Herstellungsmöglichkeiten ab. Sobald die Herstellungsmöglichkeiten abgefragt worden ist, wählt der Druckvorstufenoperator eine VDP-Familie aus der durch das Verfahren "VDP-Auftrag analysieren" 22 erzeugten Liste, um die nötigen Produktionsparameter zur Herstellung der Untermenge des PPML/VDX-Auftrags zu bestimmen.

Eine Kommunikationsschnittstelle zwischen dem Druckvorstufenprozess 20 und dem Produktionsprozess 30 ermöglicht dem Druckvorstufenoperator die Zuordnung der in der VDP-Familie spezifizierten logisch angegebenen Medien und Weiterverarbeitungsoptionen zu einem physischen Medium und einer Weiterverarbeitungsoption, wie von den Herstellungsmöglichkeiten der Vorrichtung unterstützt.

Nach Prüfen aller ausgewählten Produktionsparameter kann der Druckvorstufenoperator die Auswahl für diese VDP-Familie annehmen. Das Ergebnis der Produktionsparameterauswahl wird dann an ein Jobticket übergeben, das den Herstellungszweck der Produktionsparameter beschreibt und angibt, auf welche Falldokumente in dem PPML/VDX-Auftrag dieser Satz von Produktionsparametern anzuwenden ist. Es sei darauf hingewiesen, dass in dem bevorzugten Ausführungsbeispiel das Jobticket-Format PJTF oder JDF ist, wobei jedoch auch andere Formate verwendbar sind, wie es dem Durchschnittsfachmann auf diesem Gebiet klar ist.

Die vorausgehenden Schritte werden dann für jede VDP-Familie von der Funktion "VDP analysieren" wiederholt. Der Druckvorstufenoperator bestätigt dann, dass alle VDP-Familien einwandfrei für die Produktion spezifiziert sind. Laufende Bearbeitungsvorgänge von Jobtickets werden abgeschlossen. Der PPML/VDX-Auftrag ist dann zur Übergabe bereit.

Das Verfahren "Herstellungszweck bestimmen" greift auf Systemsoftware zu, um die Ergebnisse des Verfahrens "VDP-Auftrag analysieren" 22 auf der grafischen Benutzeroberfläche 6 darzustellen, worauf der Druckvorstufenoperator in der Lage ist, alle erforderlichen Produktionsparameter für jede VDP-Familie anzugeben. Die Liste der erforderlichen Parameter für jede VDP-Familie aus den Angaben zu den Herstellungsmöglichkeiten, wie von der ausgewählten NexStation™ 4 angegeben, lautet folgendermaßen: Anzahl der zu produzierenden Exemplare jedes Falldokuments in der VDP-Familie; vorgegebener physischer Medientyp für alle PPML/VDX-Seiten, denen kein logischer Medientyp explizit zugeordnet worden ist; physischer Medientyp für jeden angegebenen logischen Medientyp; statische Ausschießvorlage und Weiterverarbeitungsfunktion.

Die Systemsoftware fordert den Druckvorstufenoperator auf, zu bestätigen, das die Auswahl der Produktionsparameter für alle VDP-Familien abgeschlossen ist. Es ist daher nicht erforderlich, alle VDP-Familien zur Produktion auszuwählen. Die Systemsoftware überträgt die bestätigte Auswahl der Produktionsparameter für sämtliche VDP-Familien in Adobe® Jobtickets, die im bevorzugten Ausführungsbeispiel auf PJTF basieren, wobei es dem Durchschnittsfachmann auf diesem Gebiet klar ist, dass auch andere Datenstrukturen verwendbar sind, wie beispielsweise JDF. Die Systemsoftware unterstützt regelbasierendes Verknüpfen von Jobtickets, nachdem ein Jobticket bereits von einem vorherigen Prozess in einen PPML/VDX-Auftrag eingestellt worden ist. Die Systemsoftware bettet das oder die zugeordneten Adobe® Jobtickets in der PPML/VDX-Datei ein, wie von Adobe® für PDF-Dateien angegeben.

Auftragsübergabe 27 ist eine Funktion, die es dem Druckvorstufenoperator ermöglicht, die PPML/VDX-Datei zu öffnen und die gewünschten Maßnahmen durchzuführen, bevor er die PPML/VDX-Datei an den Produktionsprozess 30 übergibt. Auftragsübergabe 27 übergibt den Auftrag im PPML/VDX-Format an die Druckvorrichtung, nachdem der Druckvorstufenoperator sämtliche Operationen für den VDP-Auftrag durchgeführt hat. Im bevorzugten Ausführungsbeispiel erfolgt die Funktion Auftragsübergabe 27 als einfacher Dateiaustausch. Das bevorzugte Ausführungsbeispiel implementiert eine einzelne Datei, die alle PPML-Angaben, bezogenen PDF-Objekte und ggf. zugeordnete Jobtickets enthält. In anderen Implementierungen, die die Übergabe mehrerer Dateien ermöglichen, ist jedoch auch vorgesehen, dass die PPML-Datei Bezug auf PDF-Objekte in einer externen Datei nimmt.

Die Funktion Auftragsübergabe 27 beginnt damit, dass der Druckvorstufenoperator die zu verwendende Druckvorrichtung wählt, bei der es sich in dem bevorzugten Ausführungsbeispiel um die NexStation™ 4 handelt, wobei jedoch auch andere Vorrichtungen unterstützt werden können. Wenn beispielsweise alle Seiten in einem Auftrag in schwarzweiß gedruckt werden sollen, dann würde ein Schwarzweißdrucker die bevorzugte Vorrichtung sein. Im Druckvorstufenbereich meldet sich der Druckvorstufenoperator bei der Vorrichtung an, je nach Konfiguration der Vorrichtung 3, und wählt "Druckeigenschaften", um auf die geräteabhängigen Eigenschaften zuzugreifen. Die gewünschten Druckparameter werden ausgewählt und bestätigt (wie die PPD). Die ausgewählten Parameter werden dann zum Adobe® Jobticket hinzugefügt, das in der PPML/VDX-Datei eingebettet ist. Wenn für die PPML/VDX-Datei bereits ein Jobticket definiert ist, werden die neuen Parameter mit der vorhandenen Datenstruktur verknüpft. Wenn zuvor kein Jobticket vorhanden war, wird eines erstellt und hinzugefügt. Der Druckvorstufenoperator wählt "Drucken", worauf die gewählte Vorrichtung die PPML/VDX-Datei entgegen nimmt, die Verknüpfung des Jobtickets vornimmt, den Auftrag rastert und weiterverarbeitet. Alternativ hierzu lässt sich die Datei für das Drucken zu einem späteren Zeitpunkt austauschen, wobei die gewünschte Vorrichtung 3 wählbar ist. Mit Kenntnis des Auftrags und der Druckvorrichtung überstellt der Druckvorstufenoperator die PPML/VDX-Datei einfach an einen vorbestimmten und bereinigten virtuellen Drucker, der auf der Vorrichtung erzeugt worden ist (wie der NexStation™ 4). In der PPML/VDX-Datei kann zum Zeitpunkt der Übergabe an die NexStation™ 4 ein Jobticket eingebettet sein.

In dem bevorzugten Ausführungsbeispiel unterstützt und integriert das System eine NexStation™ 4 Druckvorrichtung sowie eine grafische Benutzeroberfläche 6, um einen NexStation™ 4 Druckertreiber auszuführen und zu unterstützen. Die grafische Benutzeroberfläche 6 ermöglicht die Auswahl und Übergabe des PPML/VDX-Auftrags an die gewählte Druckvorrichtung (NexStation™ 4 oder andere Druckvorrichtung 3). Die Erfindung sieht eine vom System bereitgestellte Navigation im Netz vor, um vorhandene virtuelle Drucker oder andere Druckvorrichtungen 3 für die NexStation™ 4 zu orten. Die Erfindung sieht zudem zukünftige Nachdrucke vor, indem die Druckvorrichtung von dem Jobticket auswählbar ist, so dass der Auftrag in identischer Weise reproduzierbar ist. Bei Wahl eines Befehls "Drucken" stellt die Systemsoftware die ausgewählte PPML/VDX-Datei in die Eingangswarteschlange der gewählten NexStation™ oder einer anderen Druckvorrichtung 3.

### Bezugszeichen

- 2: digitales Drucksystem
- 3: Druckvorrichtung
- 4: NexStation™
- 5: Eingabevorrichtung
- 6: grafische Bedienerschnittstelle (GUI)
- 10: Erstellen
- 12: VDP-Satzherstellung
- 14: Verknüpfen
- 16: Empfängerdatenbank
- 18: Inhaltsobjekte
- 20: Druckvorstufe
- 22: VDP-Auftrag analysieren
- 23: VDP-Auftrag einsehen
- 25: Herstellungszweck definieren
- 27: Auftragsübergabe
- 30: Produktion
- 32: Rasterbildprozessor (RIP)
- 34: Weiterverarbeitung
- 36: Druck
- 38: Ausschießvorlage
- 39: Medienkatalog

- 100; 110; 120; 130; 140;: Verfahrensschritt
- 150; 151; 160; 170; 180;: Verfahrensschritt
- 210; 220; 221; 225; 230;: Verfahrensschritt
- 231; 235;: Verfahrensschritt
- 250: Verfahren "VDP analysieren"
- 251;: Verfahrensschritt
- 300: Verfahren zur Erstellung dynamischer
Ausschießvorlagen
- 302; 304; 305; 306; 307;: Verfahrensschritt
- 308; 309; 316; 317; 318;: Verfahrensschritt
- 319; 320, 322; 324; 330;: Verfahrensschritt
- 335; 340; 341; 342; 343;: Verfahrensschritt
- 350: Verfahren "Abgeleiteten Auftrag erstellen"
- 351; 352: Verfahrensschritt

## Patentansprüche

1. Verfahren zum Erzeugen von Vorlagen zur Verwendung beim Drucken mit variablen Daten, das folgende Schritte umfasst:
- Bereitstellen einer Datei, die Parameter bezüglich eines Druckauftrags enthält, gegenüber einer Druckvorrichtung (3);
- Ausbilden einer Vielzahl von Kategorien aus Parametern in der Datei;
- Erzeugen von Produktionsparametern für jede der Kategorien innerhalb der Kategorien;
- Abrufen einer Liste der Herstellungsmöglichkeiten der Druckvorrichtung (3);
- Auswählen einer statischen Ausschießvorlage; und
- Zuordnen von Einträgen in diesen Kategorien zu Attributen der Druckvorrichtung (3), wie anhand der Liste der Herstellungsmöglichkeiten vorbestimmt.

2. Verfahren nach Anspruch 1,
**dadurch gekennzeichnet,**
**dass** der Schritt zum Erzeugen von Produktionsparametern das Erzeugen einen Jobtickes für jede der genannten Kategorien umfasst.

3. Verfahren nach Anspruch 2,
**dadurch gekennzeichnet,**
**dass** das Verfahren zudem den Schritt zum Erzeugen einer dynamischen Ausschießvorlage durch Sammeln von Jobtickes und das Zuordnen von Parametern zu den Kategorien umfasst.

4. Verfahren nach Anspruch 1,
**dadurch gekennzeichnet,**
**dass** der Auswählschritt zudem folgendes umfasst:
- Zuordnen bestimmter Medientypen in der Liste der Kategorien zu einem physischen Medientyp; und
- Angeben einer statischen Ausschießvorlage für diese Druckvorrichtung.

5. Verfahren nach Anspruch 4,
**dadurch gekennzeichnet,**
**dass** der Schritt des Zuordnens zudem das Zuordnen bestimmter Weiterverarbeitungsmaßnahmen, die in den Kategorien angegeben sind, zu einer physischen Weiterverarbeitungsoption umfasst, die die Liste der Herstellungsmöglichkeiten für diese Druckvorrichtung unterstützt.

6. Vörrichtung zum Erzeugen von Vorlagen im Drucken mit variablen Daten, die folgendes umfasst:
- einen Druckvorstufenbereich mit Einrichtungen zum Öffnen einer Auftragsdatei für das Drucken mit variablen Daten als eine Vielzahl von Falldokumenten;
- einen Algorithmus zum Analysieren der Falldokumente gemäß einer vorbestimmten Menge von Parametern, um einen Kategoriensatz zu erzeugen;
- einen Produktionsbereich mit einer Druckvorrichtung (3), wobei der Produktionsbereich eine Liste der Herstellungsmöglichkeiten umfasst;
- eine Schnittstelle zwischen dem Produktionsbereich und dem Druckvorstufenbereich;
- einen Mechanismus zum Übertragen der Liste von Herstellungsmöglichkeiten aus dem Produktionsbereich zu dem Druckvorstufenbereich; und
- Mittel zum Erzeugen von Vorlagen für diesen Kategoriensatz, basierend auf der Liste der Herstellungsmöglichkeiten.

7. Vorrichtung nach Anspruch 6,
**dadurch gekennzeichnet,**
**dass** der vorbestimmte Satz von Parametern zum Erzeugen eines Kategoriensatzes zur Verwendung durch den Algorithmus einen Satz von Produktionsparametern zum Herstellen der Falldokumente umfasst.

8. Vorrichtung nach einem der Ansprüche 6 bis 7,
**dadurch gekennzeichnet,**
**dass** das Mittel zum Erzeugen von Vorlagen für den Kategoriensatz auf Grundlage der Liste der Herstellungsmöglichkeiten zudem einen Zuordnungsmechanismus umfasst, der Medien in dem Kategoriensatz einem physischen Medientyp in den Herstellungsmöglichkeiten zuordnet.

9. Vorrichtung nach einem der Ansprüche 6 bis 8,
**dadurch gekennzeichnet,**
**dass** das Mittel zum Erzeugen von Vorlagen für den Kategoriensatz auf Grundlage der Liste der Herstellungsmöglichkeiten zudem das Auswählen einer Ausschießvorlage für jedes Element des Kategoriensatzes auf Grundlage der Liste der Herstellungsmöglichkeiten umfasst.

10. Vorrichtung nach einem der Ansprüche 6 bis 9,
**dadurch gekennzeichnet,**
**dass** das Mittel zum Erzeugen von Vorlagen für den Kategoriensatz auf Grundlage der Liste der Herstellungsmöglichkeiten zudem einen Zuordnungsmechanismus umfasst, der die angegebene Weiterverarbeitung in den Kategorien einer physischen Weiterverarbeitungsoption zuordnet, wie in der Liste der Herstellungsmöglichkeiten unterstützt.

11. Verfahren zum Ausgeben von Dateien auf einer Druckvorrichtung (3), das folgende Schritte umfasst:
- Bereitstellen einer Datei, die in eine Gruppe von Untermengen unterteilt ist, worin eine Vielzahl von Parametern verwendbar ist, um zu ermitteln, ob es sich bei dieser Gruppe von Untermengen um herstellungsbezogene Varianten handelt;
- Abfragen der Druckvorrichtung (3), um eine Liste von Herstellungsmöglichkeiten zu erhalten; und
- Zuordnen von Elementen der Gruppe von Untermengen zu Elementen aus der Liste der Herstellungsmöglichkeiten.

12. Verfahren nach Anspruch 11,
**dadurch gekennzeichnet,**
**dass** der Schritt des Bereitstellens zudem das logische Definieren von Produktionsparametern umfasst, die zum Herstellen jeder dieser Untermengen notwendig sind.

13. Verfahren nach Anspruch 12,
**dadurch gekennzeichnet,**
**dass** der Schritt des Zuordnens zudem das Zuordnen der Parameter zu Elementen aus der Liste der Herstellungsmöglichkeiten umfasst.

14. Verfahren nach Anspruch 13,
**dadurch gekennzeichnet,**
**dass** der Schritt des Zuordnens zudem das Zuordnen der Produktionsparameter zu einem physischen Medientyp umfasst, der in der Liste der Herstellungsmöglichkeiten unterstützt wird.

15. Verfahren nach Anspruch 11,
**dadurch gekennzeichnet,**
**dass** der Schritt des Zuordnens zudem das Zuordnen der Produktionsparameter bezüglich der Weiterverarbeitung zu einer physischen Weiterverarbeitungsoption umfasst, die in der Liste der Herstellungsmöglichkeiten unterstützt wird.

16. Verfahren nach einem der Ansprüche 11 bis 15,
**dadurch gekennzeichnet,**
**dass** der Schritt des Zuordnens zudem das Auswählen einer statischen Ausschießvorlage für jede der Untermengen umfasst.

17. Verfahren nach Anspruch 16,
**dadurch gekennzeichnet,**
**dass** der Schritt des Zuordnens zudem das Erzeugen eines Jobtickets für jede der Untermengen umfasst.
